# EUROPEAN PATENT APPLICATION

(11) **EP 2 565 213 A1**
(43) Date of publication of application: **06.03.2013**
(21) Application number: 11775011.7
(22) Date of filing: 26.04.2011
(51) Int. Cl.: C08G 18/48, C08G 101/00

(54) **METHOD FOR PRODUCING RIGID FOAM SYNTHETIC RESIN**

(30) Priority: 28.04.2010 JP 2010103788
(71) Applicant: Asahi Glass Company, Limited, Tokyo 100-8405 (JP)
(72) Inventor: YABUNO, Tatsuya, Tokyo 100-8405 (JP); SHIMIZU, Katsuhiko, Tokyo 100-8405 (JP); HAYASHI, Tomohiro, Tokyo 100-8405 (JP); TOYOTA, Yoshinori, Tokyo 100-8405 (JP)
(74) Representative: Blodig, Wolfgang
(86) International application number: PCT/JP2011/060180
(87) International publication number: WO 2011/136230

(57) **Abstract**

A process for producing a rigid foamed synthetic resin, which comprises reacting a polyol mixture (P) containing a polyol (A) and a polyol (B) and a polyisocyanate compound (I) in the presence of a blowing agent containing water, a catalyst, a foam stabilizer and a flame retardant. The polyol (A) is a polyether polyol having a hydroxyl value of from 56 to 250 mgKOH/g, obtainable by subjecting an alkylene oxide to ring-opening addition polymerization to a bisphenol compound. The polyol (B) is a polyether polyol having a hydroxyl value of from 100 to 800 mgKOH/g, obtainable by subjecting an alkylene oxide to ring-opening addition polymerization to a Mannich condensation product.

## Description

### TECHNICAL FIELD

The present invention relates to a process for producing a rigid foamed synthetic resin by reacting a polyol mixture and a polyisocyanate compound in the presence of a blowing agent, a catalyst and the like.

### BACKGROUND ART

In the field of rigid foamed synthetic resins, in recent years, from the viewpoint of the global environmental protection, techniques for reducing the use of hydrofluorocarbons (such as HFC-245fa, HFC-365mfc, hereinafter referred to as HFCs) as conventional blowing agents by using water as a blowing agent to compensate for the reduction of HFCs. However, because the foam density attained with a HFC can be attained with much less water, there is a problem that if water is used instead of an HFC at the sacrifice of the solvency of the HFC, a polyol component, a blowing agent, a foam stabilizer, a catalyst and other necessary additives form a viscous polyol system solution which adversely affects moldability and workability.

For example, a rigid foamed synthetic resin to be used as a core material for interior wall/exterior wall materials or doors of housing, is required to have excellent adhesiveness and flame retardancy. As a polyol preferred to produce a rigid foamed synthetic resin having excellent adhesiveness and flame retardancy, a polyester polyol obtainable by esterifying a dicarboxylic acid compound has been used.

However, in a case where a large amount of water is used as the blowing agent or in a case where water alone is used as the blowing agent, in a polyol system solution, the polyester polyol may be hydrolyzed in the presence of an amine catalyst or the like to form an acid. If the catalyst is deactivated by this acid, a foaming reaction may not occur as designed. That is, a polyol system solution containing a polyester polyol and water has such a problem that its storage stability tends to be poor.

To overcome such problems, the following Patent Document 1 proposes a method of inhibiting hydrolysis of a polyester polyol by using a quaternary ammonium salt as a catalyst, but no sufficient storage stability has been obtained.

The following Patent Document 2 discloses a method for producing a rigid foamed synthetic resin by water-foaming using only a polyether polyol as the polyol component, wherein an alkylene oxide adduct of bisphenol A is used as a part of the polyol component.

### PRIOR ART DOCUMENTS

### PATENT DOCUMENTS

Patent Document 1: JP-A-2005-126695
Patent Document 2: JP-A-2006-291124

### DISCLOSURE OF INVENTION

### TECHNICAL PROBLEM

By the method as disclosed in Patent Document 2, the problem of the storage stability is overcome since the polyol component contains no polyester polyol. However, the alkylene oxide adduct of bisphenol A used in Patent Document 2 has a high hydroxyl value of from 280 to 400 mgKOH/g, whereby the hydrogen bond properties between reacting molecules tend to be strong, and the polyol system solution tends to have a high viscosity.

Further, it is disclosed that if the amount of use of the alkylene oxide adduct of bisphenol A exceeds 20 mass% of the entire polyol component, the adhesiveness to the face material tends to be poor, and the polyol component in Examples contains from 60 to 80 mass% of an alkylene oxide adduct of toluenediamine having a hydroxyl value of 450 mgKOH/g in addition to the alkylene oxide adduct of bisphenol A having a high hydroxyl value. The alkylene oxide adduct of toluenediamine has a relatively high viscosity and a high hydroxyl value as well, the hydrogen bond properties between reacting molecules tend to be strong, and the polyol system solution is likely to have a higher viscosity.

Under these circumstances, the object of the present invention is to provide a process for producing a rigid foamed synthetic resin, capable of producing a rigid foamed synthetic resin excellent in the adhesiveness and the flame retardancy, while the polyol system solution has a low viscosity and favorable storage stability even though water is used as a blowing agent and the strength as the rigid foamed synthetic resin is maintained.

### SOLUTION TO PROBLEM

The present invention provides the following.
[1] A process for producing a rigid foamed synthetic resin, which comprises a step of reacting a polyol mixture (P) and a polyisocyanate compound (I) in the presence of a blowing agent, a catalyst, a foam stabilizer and a flame retardant to produce a rigid foamed synthetic resin, wherein
   the blowing agent contains water, the polyol mixture (P) contains the following polyol (A) and polyol (B), and the mass ratio (A)/(B) of the polyol (A) to the polyol (B) is from 10/90 to 90/10:
   polyol (A): a polyether polyol having a hydroxyl value of from 56 to 250 mgKOH/g, obtainable by subjecting an alkylene oxide to ring-opening addition polymerization to a bisphenol compound as an initiator; and
   polyol (B): a polyether polyol having a hydroxyl value of from 100 to 800 mgKOH/g, obtainable by subjecting an alkylene oxide to ring-opening addition polymerization to a Mannich condensation product obtainable by reacting a phenol component, an aldehyde component and an alkanolamine component, as an initiator.
[2] The process for producing a rigid foamed synthetic resin according to the above [1], wherein the alkylene oxide for the polyol (A) contains ethylene oxide.
[3] The process for producing a rigid foamed synthetic resin according to the above [2], wherein the proportion of ethylene oxide is higher than 50 mass% and at most 100 mass% per 100 mass% of all the alkylene oxides for the polyol (A).
[4] The process for producing a rigid foamed synthetic resin according to any one of the above [1] to [3], wherein the alkylene oxide for the polyol (B) contains ethylene oxide.
[5] The process for producing a rigid foamed synthetic resin according to the above [4], wherein the proportion of ethylene oxide is from 10 to 100 mass% per 100 mass% of all the alkylene oxides for the polyol (B).
[6] The process for producing a rigid foamed synthetic resin according to any one of the above [1] to [5], wherein the bisphenol compound for the polyol (A) is at least one member selected from the group consisting of bisphenol A, bisphenol F, bisphenol S, 4,4'-dihydroxybiphenyl and 2,2'-bis(4-hydroxyphenyl)hexafluoropropane.
[7] The process for producing a rigid foamed synthetic resin according to any one of the above [1] to [6], wherein in the polyol (B), the proportion of the aldehyde component is at least 0.3 mol and at most 3.0 mol per 1 mol of the phenol component, and the proportion of the alkanolamine component is at least 0.7 mol and at most 12.0 mol per 1 mol of the aldehyde component.
[8] The process for producing a rigid foamed synthetic resin according to any one of the above [1] to [7], wherein water alone is used as the blowing agent.
[9] The process for producing a rigid foamed synthetic resin according to the above [8], wherein the amount of water used is from 0.5 to 10 parts by mass per 100 parts by mass of the polyol mixture (P).
[10] The process for producing a rigid foamed synthetic resin according to any one the above [1] to [9], wherein the rigid foamed synthetic resin is produced by spraying.

### ADVANTAGEOUS EFFECTS OF INVENTION

According to the process for producing a rigid foamed synthetic resin of the present invention, the polyol system solution has a low viscosity and favorable storage stability even though water is used as a blowing agent, and a rigid foamed synthetic resin excellent in the adhesiveness and the flame retardancy can be produced.

The process is particularly suitable for production of a rigid foamed synthetic resin by spraying for which excellent adhesiveness is required.

### DESCRIPTION OF EMBODIMENTS

In the present invention, "polyol system solution" means a solution to be reacted with a polyisocyanate compound and contains a blowing agent, a foam stabilizer, a catalyst, a flame retardant and other necessary additives, in addition to a polyol.

In the present invention, "rigid foamed synthetic resin" is a generic name for rigid polyurethane foams and rigid polyisocyanurate foams and is sometimes referred to as rigid foam hereinafter.

In the present invention, "Mannich condensation product" is a compound obtained by reacting a phenol component, an aldehyde component and an alkanolamine component.

In the present invention, "polymer-dispersed polyol" is a polyol (W) obtained by polymerizing a monomer having a polymerizable unsaturated bond in a base polyol (W') such as a polyether polyol or a polyester polyol to form polymer particles therein and is a dispersion of the polymer particles in the base polyol (W').

### [Polyol mixture (P)]

The polyol mixture (P) in the present invention is constituted by polyether polyols and contains a polyol (A) and a polyol (B). In the present invention, no polyester polyol is used in view of the storage stability of the polyol system solution.

### [Polyol (A)]

The polyol (A) is a polyether polyol obtainable by subjecting an alkylene oxide to ring-opening addition polymerization to a bisphenol compound as an initiator.

As the bisphenol compound as the initiator, at least one member selected from the group consisting of bisphenol A, bisphenol F, bisphenol S, 4,4'-dihydroxybiphenyl and 2,2'-bis(4-hydroxyphenyl)hexafluoropropane is used. More preferred is bisphenol A, bisphenol F, bisphenol S or the like in view of availability.

The amount of the alkylene oxide to be added to the bisphenol compound as the initiator is preferably from 4 to 40 mol, more preferably from 6 to 30 mol, per 1 mol of the bisphenol compound. When the amount of the alkylene oxide added is at least the lower limit of the above range, the viscosity of the polyol (A) tends to be low. When the amount of the alkylene oxide added is at most the upper limit of the above range, favorable strength is likely to be obtained when the obtainable polyol (A) is used for production of a rigid foam, and shrinkage of the rigid foam is likely to be suppressed.

The alkylene oxide to be subjected to ring-opening addition polymerization to the initiator is preferably at least one member selected from the group consisting of ethylene oxide, propylene oxide and butylene oxide.

With a view to achieving a lower viscosity of the polyol (A), it is preferred that the alkylene oxide contains ethylene oxide (hereinafter sometimes referred to as EO), and use of EO alone or a combination of EO and propylene oxide (hereinafter sometimes referred to as PO) is more preferred.

When the amount of all the alkylene oxides to be used for the ring-opening addition polymerization reaction is 100 mass%, the proportion of EO is preferably higher than 50 mass% and at most 100 mass%, more preferably from 80 to 100 mass%, most preferably 100 mass%. When it is higher than 50 mass%, the viscosity of the polyol (A) tends to be low, and such is preferred to lower the liquid viscosity of the polyol mixture (P). When the polyol mixture (P) has a low viscosity, the viscosity of the polyol system solution tends to be low, the wettability to an adherend tends to be favorable, whereby the adhesiveness will be improved, and the flame retardancy will also be improved.

Further, EO contributes to an improvement in hydrophilicity of the polyol (A). When the polyol (A) has high hydrophilicity, miscibility with water and the solubility of the polyol in the polyol system solution containing water as a blowing agent will be improved.

Further, when a plurality of polyols are used in combination as the polyol (A), the proportion of EO is a value as the entire polyol (A).

When EO and PO are used in combination, the ring-opening addition polymerization may be any polymerization method of block polymerization and random polymerization. Further, the polyol (A) may be produced by combination of block polymerization and random polymerization. In the case of block polymerization, the alkylene oxides are subjected to ring-opening addition polymerization preferably in the order of propylene oxide and ethylene oxide or in the order of ethylene oxide, propylene oxide and ethylene oxide. Ring-opening addition polymerization in this order is preferred because a polyol (A) having primary hydroxy groups as predominant hydroxyl groups which is highly reactive with the polyisocyanate compound (I) can be obtained, and hence, a rigid foam with better appearance can be obtained. The adhesiveness of the resulting rigid foam also improves. Further, such is preferably applicable to production of a rigid foamed synthetic resin by spraying for which a high reactivity is required.

The polyol (A) can be produced by a method of subjecting an alkylene oxide to an initiator comprising a bisphenol compound by a known method.

The hydroxyl value of the polyol (A) is from 56 to 250 mgKOH/g. When it is at least 56 mgKOH/g, a favorable strength of the rigid foam will be obtained, and the shrinkage is likely to be suppressed. When it is at most 250 mgKOH/g, the viscosity of the polyol (A) tends to be low. The hydroxyl value is more preferably within a range of from 100 to 200 mgKOH/g. Within such a range, the polyol system solution tends to have a further lower viscosity, and an excellent strength of the rigid foam is likely to be obtained, and accordingly such is particularly suitable in the process for producing a rigid foam by spraying.

As the polyol (A), two or more species may be used in combination, as long as each species has a hydroxyl value within the above-mentioned range.

### [Polyol (B)]

The polyol (B) is a polyether polyol obtainable by subjecting an alkylene oxide to ring-opening addition polymerization to a Mannich condensation product obtainable by reacting a phenol component, an aldehyde component and an alkanolamine component as an initiator.

The phenol component is at least one member selected from the group consisting of phenol and phenol derivatives having a hydrogen atom at least one ortho-position to the phenolic hydroxyl group.

That is, it is required only to have a hydrogen atom at least one ortho-position to the phenolic hydroxyl group and may be phenol or a phenol derivative.

As phenol derivatives, alkylphenols having a hydrogen atom at one or more ortho-positions to the phenolic hydroxyl group and having at least one C₁₋₁₅ linear or branched alkyl group in place of at least one of the other hydrogen atoms are preferred. The alkyl group(s) may be present at the ortho-, meta- or para-position. The alkylphenols have from 1 to 5 alkyl groups, preferably from 1 to 2 alkyl groups, particularly preferably one alkyl group, instead of hydrogen atoms.

The alkyl groups in the alkylphenols preferably have from 1 to 10 carbon atoms. As the alkylphenols, nonylphenol and cresol are preferably used. Nonylphenol is particularly preferred in view of improvement of the miscibility of the polyol (B) with the polyisocyanate compound (I) and better cell appearance.

As the aldehyde component, formaldehyde, acetaldehyde or a mixture of them is used. Among them, formaldehyde is preferred in view of improvement of the adhesiveness of the rigid foam. Formaldehyde may be used in any form such as an aqueous formalin solution, a methanol solution and paraformaldehyde. When paraformaldehyde is used, it may be heated to produce formaldehyde, and the formaldehyde may be used for the reaction in this step, and the molar amount of paraformaldehyde to be used is calculated in terms of formaldehyde.

The alkanolamine component is at least one member selected from the group consisting of monoethanolamine, diethanolamine and 1-amino-2-propanol. Among them, diethanolamine is more preferred in view of the balance between improving the strength of the resulting rigid foam and lowering the viscosity of the polyol (B).

The Mannich condensation product used as the initiator is a reaction product obtainable by reacting the above phenol component, aldehyde component and alkanolamine component (hereinafter sometimes referred to as Mannich condensation reaction). The reaction product is supposed to contain unreacted reactants remaining after the reaction. The Mannich condensation reaction may be carried out by a known method.

In the materials to be used for the Mannich condensation reaction, the proportion of the aldehyde component is preferably at least 0.3 mol and at most 3.0 mol per 1 mol of the phenol component. When the proportion of the aldehyde component is at least 0.3 mol, the resulting rigid foam tends to have good dimensional stability. When it is at most 3.0 mol, the resulting polyol (B) tends to have a low viscosity. Further, with a view to achieving a lower viscosity of the polyol (B), it is preferably at least 0.3 mol and less than 0.9 mol, and in view of the strength of the obtainable rigid foam, it is more preferably at least 0.9 mol and at most 1.35 mol.

In the materials to be used for the Mannich condensation reaction, the proportion of the alkanolamine component is preferably at least 0.7 mol and at most 12.0 mol per 1 mol of the aldehyde component. When the proportion of the alkanolamine component is at least 0.7 mol, the obtainable rigid foam tends to have favorable strength. When it is at most 12.0 mol, the obtainable rigid foam tends to have favorable flame retardancy. Further, in view of the flame retardancy of the obtainable rigid foam, it is preferably at least 0.7 mol and at most 5.0 mol. With a view to obtaining a polyol (B) having a low viscosity, it is preferably at least 0.7 mol and at most 5.0 mol, more preferably at least 0.7 mol and at most 3.5 mol.

Particularly in a case where priority is given to a low viscosity of the obtainable polyol (B), it is preferred to use from 0.3 to 0.9 mol of the aldehyde component per 1 mol of the phenol component and to use from 0.7 to 5.0 mol of the alkanolamine component per 1 mol of the aldehyde component. With the Mannich condensation product obtainable by the Mannich condensation reaction with such a proportion, a polyol (B) having a low viscosity will be obtained, since the degree of condensation of the Mannich condensation product can be suppressed.

Further, in a case where priority is given to the flame retardancy of the obtainable rigid foam, it is preferred to use from 0.9 to 2.5 mol of the aldehyde component per 1 mol of the phenol component and to use from 0.7 to 5.0 mol of the alkanolamine component per 1 mol of the aldehyde component. In the Mannich condensation product obtainable by the Mannich condensation reaction with such a proportion, substantially no unreacted alkanolamine component will remain, and the polyol (B) obtainable by subjecting the alkylene oxide to ring-opening addition polymerization contains substantially no aliphatic polyol, whereby the obtainable rigid foam is excellent in the flame retardancy.

The polyol (B) is obtainable by subjecting an alkylene oxide to the reaction product obtained by the Mannich condensation reaction as the initiator by a known method.

The amount of the alkylene oxide added to the initiator is preferably from 2 to 30 mol, more preferably from 4 to 20 mol, per 1 mol of the phenol component to be used for the Mannich condensation reaction. When the amount of the alkylene oxide added is at least 2 mol, the resulting polyol (B) tends to have a low hydroxyl value and a low viscosity. When the amount of the alkylene oxide added is at most 30 mol%, a rigid foam obtainable by using the resulting polyol (B) is unlikely to shrink.

The alkylene oxide to be subjected to ring-opening addition polymerization to the Mannich condensation product as the initiator is preferably at least one member selected from the group consisting of EO, PO and butylene oxide. In view of a low viscosity of the obtainable polyol (B), it is preferred that the alkylene oxide contains EO, and use of EO alone or a combination of EO and PO is more preferred.

When the amount of all the alkylene oxides used for the ring-opening addition polymerization is 100 mass%, the proportion of EO is preferably from 10 to 100 mass%, more preferably from 20 to 100 mass%. When it is at least the lower limit of the above range, the viscosity of the polyol (B) tends to be low, and such is preferred to lower the viscosity of the polyol mixture (P) and the viscosity of the polyol system solution.

Further, EO contributes to improvement in the hydrophilicity of the polyol (B). When the polyol (B) has high hydrophilicity, the miscibility with water and the solubility of the polyol in the polyol system solution containing water as a blowing agent will be improved.

In addition, in a case where the terminal of the polyol (A) is a primary hydroxy group derived from EO (for example, in a case where the proportion of EO is 100 mass% based on 100 mass% of all the alkylene oxides, the reactivity of the polyol (B) and the polyisocyanate compound (I) tends to be high. As a result, a rigid foam with better appearance can be obtained, such being preferred. The adhesiveness of the resulting rigid foam will also improve. Further, such is preferably applicable to production of a rigid foamed synthetic resin by spraying for which high reactivity is required.

Further, when the polyol (B) consists of two or more species, the proportion of EO means the value in the entire polyol (B).

The polyol (B) has a hydroxyl value of from 100 to 800 mgKOH/g, more preferably from 200 to 550 mgKOH/g, further preferably from 250 to 450 mgKOH/g. As the polyol (B), two or more species may be used in combination, as long as each species has a hydroxyl value within the above-mentioned range.

When the hydroxyl value of the polyol is at least the lower limit of the above range, the strength of the obtainable rigid foam tends to be secured, and favorable dimensional stability is likely to be obtained. On the other hand, when the hydroxyl value is at most the upper limit, the amount of the oxyalkylene chains derived from the alkylene oxide present in the polyol (B) will increase, and the viscosity of the polyol (B) is likely to be lowered. Further, the rigid foam to be produced is less likely to be fragile, and the adhesiveness is likely to be obtained.

The mass ratio (A)/(B) of the polyol (A) to the polyol (B) contained in the polyol mixture (P) is from 10/90 to 90/10, preferably from 25/75 to 90/10, more preferably from 30/70 to 85/15.

Within such a range, the obtainable rigid foam tends to have favorable strength and favorable flame retardancy. Further, when a rigid foam is produced by spraying, good workability will be obtained, and in the case of spraying on a wall, foaming of the rigid foam in the horizontal direction will be suppressed. By the foaming in the horizontal direction being suppressed, the sprayed surface tends to be smooth. Further, in the case of multilayer spraying, foam layers adhere to one another will.

In order to sufficiently obtain the desired effects of the present invention, the total amount of the polyol (A) and the polyol (B) is preferably at least 70 mass%, more preferably at least 85 mass%, further preferably at least 90 mass%, based on the entire polyol mixture (P). The total amount of the polyol (A) and the polyol (B) may be 100 mass%.

The average hydroxyl value of the entire polyol mixture (P) is preferably from 100 to 800 mgKOH/g, more preferably from 150 to 400 mgKOH/g. When the average hydroxyl value is at least the lower limit of the above range, the strength of the obtainable rigid foam is likely to be secured, and favorable dimensional stability is likely to be obtained. When it is at most the upper limit of the above range, the rigid foam to be produced is less likely to be fragile, and adhesiveness is likely to be obtained.

### [Polyol (C)]

The polyol mixture (P) may contain a polyol (C) in addition to the polyol (A) and the polyol (B). The polyol (C) contains no polymer particles.

The polyol (C) may be one obtainable by subjecting an alkylene oxide to ring-opening addition polymerization to an initiator such as a polyhydroxy compound such as a polyhydric alcohol or a polyhydric phenol or an amine component. The number of functional groups in the initiator is preferably from 2 to 4.

The initiator for the polyol (C) may be a polyhydric alcohol such as ethylene glycol, propylene glycol, dipropylene glycol, glycerol, trimethylolpropane or pentaerythritol; an amino compound such as piperazine, aniline, monoethanolamine, diethanolamine, isopropanolamine, aminoethylethanolamine, ammonia, aminomethylpiperazine, aminoethylpiperazine, ethylenediamine, propylenediamine, hexamethylenediamine, tolylenediamine or xylylenediamine; or an alkylene oxide adduct thereof.

The alkylene oxide to be subjected to ring-opening addition polymerization to the initiator is preferably at least one member selected from the group consisting of PO, EO and butylene oxide, and it preferably contains at least EO. Use of EO alone or a combination of PO and EO is preferred. Particularly preferred is a polyol (C) having a primary hydroxy group derived from EO at its terminal, obtainable by subjecting PO to ring-opening addition polymerization and then subjecting PO to ring-opening addition polymerization.

When the proportion of all the alkylene oxides to be used for the ring-opening addition polymerization is 100 mass%, the proportion of EO is from 0 to 100 mass%, preferably from 10 to 100 mass%, more preferably from 20 to 100 mass%.

The hydroxyl value of the polyol (C) is from 56 to 200 mgKOH/g, preferably from 80 to 170 mgKOH/g, more preferably from 80 to 150 mgKOH/g. When the hydroxyl value is within a range of from 56 to 200 mgKOH/g, the adhesiveness to the substrate is likely to improve.

In the present invention, although the polyol (C) is not an essential component, and in a case where the polyol mixture (P) contains the polyol (C), the content in the polyol mixture (P) is preferably higher than 0 mass% and at most 30 mass%, more preferably from 5 to 20 mass%.

In the present invention, when a polyol obtained by using an aliphatic polyhydric alcohol as the initiator is used as the polyol (C), the wettability of the foaming stock solution composition which is a mixture of the polyol system solution and the polyisocyanate compound to the substrate is likely to improve, and more favorable adhesiveness between the rigid foam and the substrate is likely to be obtained.

When a polyol obtained by subjecting EO alone to ring-opening addition polymerization to an initiator comprising an amino compound is used as the polyol (C), the blowing properties at the initial stage of foaming tends to be improved, and particularly in production of a rigid foam by spraying, the rise of the rigid foam at the time of spraying (the time till foaming is started) will be shortened and improved.

When a polyol obtained by using an amino compound as the initiator is used as the polyol (C), the strength of the obtainable rigid foam will be more improved.

### [Polymer-dispersed polyol (W)]

In the polyol mixture (P), polymer particles may be incorporated. Here, the polymer particles are ones obtainable by polymerizing a monomer having a polymerizable unsaturated bond. As such a monomer, usually a monomer having one polymerizable unsaturated bond is used, but the monomer is not limited thereto. Such a monomer may, for example, be a styrene monomer, an acrylic monomer, a vinyl ester monomer, a diene monomer, a vinyl halide, a vinylidene halide or a halogenated olefin. These monomers will be described hereinafter in detail. The polymer particles are preferred to be dispersed in the polyol mixture (P), and specifically speaking, it is preferred to prepare a polymer-dispersed polyol (W) having polymer particles dispersed in a base polyol (W') and incorporate the polymer-dispersed polyol (W) in the polyol mixture (P).

The polymer-dispersed polyol (W) may be a single species or a combination of two or more species. The polymer particles preferably have an outer diameter of at most 10 µm. In this specification, the outer diameter of the polymer particles is a value measured with a Microtrack ultrafine particle size analyzer UPA-EX150 manufactured by NIKKISO CO., LTD.

The content of polymer particles in the entire polyol mixture (P) is preferably from 0.002 to 10 mass%, more preferably from 0.02 to 10 mass%, particularly preferably from 0.5 to 7 mass%. When the content is within the above-mentioned range, it is possible to maintain the heat insulating properties while effectively preventing the shrinkage of the resulting rigid foam.

The hydroxyl value of the polymer-dispersed polyol (W) is preferably from 100 to 800 mgKOH/g, more preferably from 150 to 800 mgKOH/g. In this specification, the hydroxyl value of the polymer-dispersed polyol (W) is obtained by measuring the hydroxyl value of the dispersion of polymer particles in the base polyol (W').

When the hydroxyl value of the polymer-dispersed polyol (W) is at least the lower limit of the above-mentioned range, the polyol is miscible with the other polyols, and when it is at most the upper limit of the above-mentioned range, the polymer particles are dispersed stably.

The polymer-dispersed polyol (W) is prepared by polymerizing a monomer having a polymerizable unsaturated bond into particles in the base polyol (W'), if necessary in the presence of a solvent.

The monomer having a polymerizable unsaturated bond to be used for formation of the polymer particles is usually a monomer having one polymerizable unsaturated bond, but is not limited thereto.

Specific examples of the monomer include cyano group-containing monomers such as acrylonitrile, methacrylonitrile and 2,4-dicyanobutene-1; styrene monomers such as styrene, α-methylstyrene and halogenated styrenes; acrylic monomers such as acrylic acid, methacrylic acid and alkyl esters thereof and acrylamide and methacrylamide; vinyl ester monomers such as vinyl acetate and vinyl propionate; diene monomers such as isoprene, butadiene and other diene monomers; unsaturated fatty acid esters such as maleic acid diesters and itaconic acid diesters; vinyl halides such as vinyl chloride, vinyl bromide and vinyl fluoride; vinylidene halides such as vinylidene chloride, vinylidene bromide and vinylidene fluoride; vinyl ether monomers such as methyl vinyl ether, ethyl vinyl ether and isopropyl vinyl ether; and other olefins and halogenated olefins.

A preferably used monomer is a combination of from 20 to 90 mass% of acrylonitrile and from 10 to 80 mass% of another monomer, and as such another monomer, styrene, an alkyl acrylate, an alkyl methacrylate or vinyl acetate is preferred. Such other monomers may be used in combination of two or more of them.

In addition to the above-mentioned monomers, a fluorinated acrylate or a fluorinated methacrylate (hereinafter sometimes referred to as "a fluorinated monomer") is preferably used as part or the entire of the monomer having a polymerizable unsaturated bond. Use of such a fluorinated monomer allows the polymer particles to disperse in the base polyol (W') more stably and improves miscibility of the polymer-dispersed polyol (W) with the other polyols, and therefore, is expected to improve the dimensional stability and heat insulating properties of the resulting rigid foam.

As a suitable fluorinated monomer, a monomer represented by the following formula (1) may be mentioned: 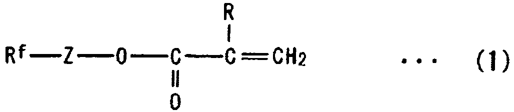 wherein R^{f} is a C₁₋₁₈ linear of branched polyfluoroalkyl group. The number of carbon atoms in R^{f} is from 1 to 18, preferably from 1 to 10, more preferably from 3 to 8.

R^{f} is preferably such that the proportion of fluorine atoms in the alkyl group (the proportion of the number of hydrogen atoms substituted by fluorine atoms in the alkyl group) is preferably at least 80%, and it is particularly preferred that all hydrogen atoms are substituted by fluorine atoms. When the number of carbon atoms is at most 18, the stability of a foam will be good at the time of foaming in the production of a rigid foam.

R is a hydrogen atom or a methyl group.

Z is a bivalent linking group having no fluorine atoms and is preferably a hydrocarbon group, and may, for example, be an alkylene group or an arylene group, more preferably an alkylene group. The alkylene group is preferably a C₁₋₁₀ alkylene group, particularly preferably a C₁₋₅ alkylene group, and it may be linear or branched. Here, Z and R^{f} are delimited so that R^{f} has fewer carbon atoms than Z.

Specific examples of the monomer represented by the above formula (1) include the compounds represented by the following formulae (1-1) to (1-3).

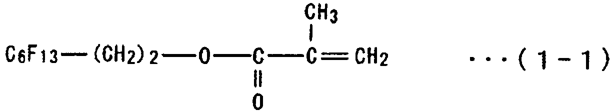

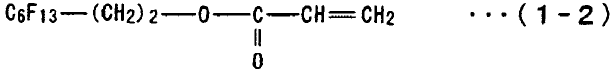

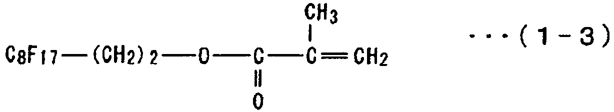

Such fluorinated monomers may be used singly or in combination of at least two.

When a fluorinated monomer is used, its amount is preferably from 10 to 100 mass%, more preferably from 30 to 80 mass%, based on the entire monomer having a polymerizable unsaturated group.

Especially, when a monomer presented by the formula (1) is used, its amount is preferably from 20 to 100 mass%, more preferably from 30 to 60 mass%, most preferably from 40 to 60 mass%, based on all the monomers having a polymerizable unsaturated group.

When the proportion of the monomer represented by the above formula (1) is at least 20 mass%, particularly at least 30 mass%, good heat-insulating properties of a rigid polyurethane foam can be obtained.

When a fluorinated monomer is used, in addition to the above-mentioned monomer having a polymerizable unsaturated bond, a macromonomer may be used in combination. A "macromonomer" means a low molecular weight polymer or oligomer having a radical polymerizable unsaturated bond at one terminal.

The total amount of monomers having a polymerizable unsaturated bond to be used for formation of polymer particles is not particularly restricted, but is preferably such that the content of polymer particles in the polymer-dispersed polyol (W) is from 1 to 50 mass%, more preferably from 2 to 45 mass%, further preferably from 10 to 30 mass%.

For polymerization of monomers having a polymerizable unsaturated group, a polymerization initiator which generates a free radical to initiate the polymerization is preferably used. As specific examples of the polymerization initiator, 2,2-azobisisobutyronitrile (AIBN), 2,2'-azobis-2-methylbutyronitrile (AMBN), 2,2'-azobis-2,4-dimethylvaleronitrile, benzoyl peroxide, diisopropyl peroxydicarbonate, acetyl peroxide, di-tert-butyl peroxide, persulfates and the like may be mentioned. AMBN is particularly preferred.

The base polyol (W') may, for example, be a polyether polyol or a hydrocarbon polymer having hydroxyl groups at its terminals and so on. It is preferably composed solely of a polyether polyol, or is a combination of a polyether polyol as the main component and a small amount of a hydrocarbon polymer having hydroxyl groups at its terminals or the like.

The polyether polyol may, for example, be a polyether polyol obtainable by adding a cyclic ether such as an alkylene oxide to an initiator such as a polyhydroxy compound such as a polyhydric alcohol or a polyhydric phenol, or an amine. As the based polyol (W'), the same polyether polyol as the polyol (A), the polyol (B) or the polyol (C) may be used.

It is preferred that the following polyether polyol (X) accounts for at least 5 mass% of the base polyol (W'). The polyether polyol (X) is a polyether polyol having a hydroxyl value of at most 84 mgKOH/g and having an oxyethylene group content of at least 40 mass% in the entire polyether polyol (X).

The polyether polyol (X) is preferably a polyether polyol obtainable by adding EO or EO and another cyclic ether to a polyhydric alcohol as an initiator.

The polyhydric alcohol is preferably glycerol, trimethylolpropane or 1,2,6-hexanetriol. Another cyclic ether is preferably PO or butylene oxide, particularly preferably PO.

By using the polyether polyol (X) having a hydroxyl value of at most 84 mgKOH/g, it becomes possible to easily obtain a polymer-dispersed polyol (W) in which polymer particles are stably dispersed. The hydroxyl value of the polyether polyol (X) is preferably at most 67 mgKOH/g, particularly preferably at most 60 mgKOH/g. From the viewpoint of the dispersion stability of the polymer particles, the lower limit of the hydroxyl value of the polyether polyol (X) is preferably 5 mgKOH/g, more preferably 8 mgKOH/g, further preferably 20 mgKOH/g, particularly preferably 30 mgKOH/g.

When the oxyethylene group content in the entire polyether polyol (X) is at least 40 mass%, the dispersability of the polymer particles in the polymer-dispersed polyol (W) can easily be achieved. The oxyethylene group content is more preferably at least 50 mass%, further preferably at least 55 mass%. The upper limit of the oxyethylene group content may be about 100 mass%. That is, it may be a polyether polyol (X) obtained by adding only ethylene oxide to the initiator. From the viewpoint of the dispersion stability of the polymer particles, the oxyethylene group content is preferably at most 90 mass%.

When the content of the polyether polyol (X) in the base polyol (W') is at least 5 mass%, a polymer-dispersed polyol (W) having good dispersability can easily be obtained. The content of the polyether polyol (X) is more preferably at least 10 mass%. There is no particular upper limit for the content of the polyether polyol (X), but it is preferably set so that the hydroxyl value of the entire polymer-dispersed polyol (W) will be within the above-mentioned preferred range.

The base polyol (W') is preferably a mixture of from 5 to 90 mass% of the polyether polyol (X) and from 10 to 95 mass% of a polyol (Z) having a hydroxyl value of from 400 to 850 mgKOH/g, more preferably a mixture of from 30 to 80 mass% of the polyether polyol (X) and from 20 to 70 mass% of the polyol (Z).

The hydroxyl value of the polyol (Z) is more preferably from 400 to 800 mgKOH/g.

The polyol (Z) may be one having a hydroxyl value within the above-mentioned range among the polyether polyols mentioned for the above base polyol (W') and is preferably a polyether polyol obtainable by adding propylene oxide to an initiator such as a polyhydric alcohol or amine.

When the polymer-dispersed polyol (W) is incorporated in the polyol mixture (P), its content is set so that the content of the polymer particles in the entire polyol mixture (P) falls within the above-mentioned preferred range. For example, the content of the polymer-dispersed polyol (W) in the entire polyol mixture (P) is preferably within a range of from 0.2 to 20 mass%, more preferably from 0.8 to 20 mass%.

### [Polyisocyanate compound (I)]

The polyisocyanate compound (I) may, for example, be an aromatic, alicyclic or aliphatic polyisocyanate having at least two isocyanate groups; a mixture of two or more of the above polyisocyanates or a modified polyisocyanate obtainable by modifying such a polyisocyanate.

Specific examples include polyisocyanates such as tolylene diisocyanate (TDI), diphenylmethane diisocyanate (MDI), polymethylene polyphenyl polyisocyanate (so-called crude MDI), xylylene diisocyanate (XDI), isophorone diisocyanate (IPDI) and hexamethylene diisocyanate (HMDI), and prepolymer-type modified products, isocyanurate modified products, urea modified products and carbodiimide modified products thereof. Among them, crude MDI or a modified product thereof is preferred, and a modified product of crude MDI is particularly preferred.

The viscosity of the polyisocyanate compound (I) at 25°C is preferably from 50 to 300 mPa·s, more preferably from 50 to 150 mPa·s. When the viscosity is within this range, the resulting foam hardly shrinks. Besides, a rigid foam with good appearance can be obtained by spray molding with good workability.

The amount of the polyisocyanate compound (I) is preferably from 100 to 300, more preferably from 100 to 200 in terms of 100 times the ratio of isocyanate groups to total active hydrogen groups from the polyol mixture (P) and the other active hydrogen compounds (hereinafter which is referred to as "isocyanate index").

The amount of the polyisocyanate compound (I) to be used for urethane formulations mainly using a catalyst which catalyzes the urethane-forming reaction as the catalyst for production of a rigid foamed synthetic resin is preferably from 100 to 170, more preferably from 100 to 150, in terms of isocyanate index.

The amount of the polyisocyanate compound (I) to be used for isocyanurate formulations mainly using a catalyst which catalyzes trimerization of isocyanate groups as the catalyst for production of a rigid foamed synthetic resin is preferably from 100 to 300, more preferably from 100 to 250, in terms of isocyana index. In the present invention, it is preferred to employ the isocyanurate formulations.

### [Catalyst]

As the catalyst, the catalyst which catalyzes urethane-forming reaction is preferably a tertiary amine, and the catalyst which catalyzes trimerization of isocyanate groups is preferably a metal salt and/or a quaternary ammonium salt. In the case of the isocyanurate formulations, preferred is a combination of a catalyst which catalyzes urethane-forming reaction and the catalyst which catalyzes trimerization of isocyanate groups, more preferred is a combination of a tertiary amine and a metal salt and/or a quaternary ammonium salt.

The tertiary amine may, for example, be a tertiary amine compound such as N,N,N',N'-tetramethylethylenediamine, N,N,N',N'-tetramethylpropylenediamine, N,N,N',N",N"-pentamethyldiethylenetriamine, N,N,N',N",N"-pentamethyl-(3-aminopropyl)ethylenediamine, N,N,N',N",N"-pentamethyldipropylenetriamine, N,N,N',N'-tetramethylguanidine, 1,3,5-tris(N,N-dimethylaminopropyl)hexahydro-S-triazine, 1,8-diazabicyclo[5.4.0]undecene-7, triethylenediamine, N,N,N',N'-tetramethylhexamethylenediamine, N,N'-dimethylpiperazine, dimethylcyclohexylamine, N-methylmorpholine, N-ethylmorpholine, bis(2-dimethylaminoethyl) ether, 1-methylimidazole, 1,2-dimethylimidazole, 1-isobutyl-2-methylimidazole, 1-dimethylaminopropylimidazole or N-methyl-N-(N,N-dimethylaminoethyl)ethanolamine, etc. Among them, 1,3,5-tris(N,N-dimethylaminopropyl)hexahydro-s-triazine, 1,N-methyl-N-(N,N-dimethylaminoethyl)ethanolamine or bis(2-dimethylaminoethyl) ether is preferred because it is excellent in the catalytic activity and hardly generates an odor.

As the metal salt, a metal salt other than tin, zinc and mercury salts is used. For example, metal carboxylates such as potassium acetate, potassium 2-ethylhexanoate and bismuth 2-ethylhexanoate are preferred. Potassium 2-ethylhexanoate is more preferred in view of the environmental pollution, the cost and the catalytic activity in foaming by spraying.

The quaternary ammonium salt may, for example, be a tetraalkylammonium halide such as tetramethylammonium chloride; a tetraalkylammonium hydroxide such as tetramethylammonium hydroxide; a tetraalkylammonium organic acid salt such as tetramethylammonium 2-ethylhexanoate, 2-hydroxypropyltrimethylammonium formate or 2-hydroxypropyltrimethylammonium 2-ethylhexanoate; or a quaternary ammonium compound obtainable by subjecting a quaternary ammonium carbonate obtainable by reacting a tertiary amine such as N,N,N',N'-tetramethylethylene diamine with a carbonate diester to an anion exchange reaction with 2-ethylhexanoic acid.

The amount of the catalyst to be used is preferably from 0.1 to 20 parts by mass, more preferably from 1 to 18 parts by mass per 100 parts by mass of the polyol mixture (P). By adjusting the amount of the catalyst, it is possible to adjust the reactivity of the polyol mixture (P) and the polyisocyanate compound (I), i.e. the time (rise time) required until the visual observation of termination of the foaming after mixing.

### [Blowing agent]

In the present invention, as the blowing agent, at least water is used. The blowing agent may be water alone, or a blowing agent other than water may be used in combination. As the blowing agent other than water, for example, HFC, a hydrocarbon compound or a general purpose gas may be used in combination. From the environmental consideration, it is more preferred to use water alone as the blowing agent.

The HFC may, for example, be 1,1,1,2-tetrafluoroethane (HFC-134a), 1,1,1,3,3-pentafluoropropane (HFC-245fa), 1,1,1,3,3-pentafluorobutane (HFC-365mfc), 1,1,2,2-tetrafluoroethyl difluoromethyl ether (HFE-236pc), 1,1,2,2-tetrafluoroethyl methyl ether (HFE-254pc) or 1,1,1,2,2,3,3-heptafluoropropyl methyl ether (HFE-347mcc).

The hydrocarbon compound may, for example, be butane, n-pentane, iso-pentane, cyclopentane, hexane or cyclohexane.

The general purpose gas may, for example, be the air, nitrogen or carbon dioxide gas. Among them, carbon dioxide gas is preferred. The state of addition of the inert gas may be any of a liquid state, a supercritical state and a subcritical state.

Blowing agents other than water may be used singly or in combination of at least two.

In a case where water alone is used as the blowing agent, the amount of water is preferably from 0.5 to 10 parts by mass, particularly preferably from 0.5 to 7 parts by mass per 100 parts by mass of the polyol mixture (P).

Further, when pentane (n-pentane, iso-pentane and/or cyclopentane) alone is used as the blowing agent, the amount of pentane (n-pentane, iso-pentane and/or cyclopentane) to be used is preferably from 0.5 to 40 parts by mass, particularly preferably from 0.5 to 30 parts by mass per 100 parts by mass of the polyol mixture (P).

### [Foam stabilizer]

The foam stabilizer may, for example, be a silicone-type foam stabilizer or a fluorinated compound type foam stabilizer. In the present invention, it is preferred to use a silicone type foam stabilizer in order to form good cells.

The silicone-type foam stabilizer may be a compound containing a block copolymer of dimethylpolysiloxane and polyether. Specifically, it may, for example, be SZ-1671, SZ-1718, SH-193, SZ-1642 or the like manufactured by Dow Corning Toray Co., Ltd., L-6884, L-5440, L-5420 or the like manufactured by Momentive Performance Materials Inc. or B8443, B8490, B8460 or the like manufactured by EVONIK INDUSTRIES.

The amount of the foam stabilizer can be adjusted appropriately, but it is preferably from 0.1 to 10 parts by mass, more preferably from 0.3 to 5 parts by mass per 100 parts by mass of the polyol mixture (P).

### [Flame retardant]

The flame retardant to be used in the present invention may, for example, be a phosphoric acid compound such as a phosphate such as triethyl phosphate, tributyl phosphate, trischloroethyl phosphate, trischloropropyl phosphate (abbreviated name: TCPP), triphenyl phosphate, tricresyl phosphate or polyphosphoric acid, or a phosphite or chlorinated paraffin.

The amount of the flame retardant used is preferably from 10 to 60 parts by mass, more preferably from 20 to 40 parts by mass per 100 parts by mass of the polyol mixture (P), whereby the obtainable rigid foam securely has both excellent mechanical properties and flame retardancy.

### [Other additives]

In the present invention, optional additives may be used in addition to the polyisocyanate compound (I), the catalyst, the blowing agent, the foam stabilizer and the flame retardant. Such additives may, for example, be a filler such as calcium carbonate or barium sulfate; an anti-aging agent such as an antioxidant or an ultraviolet absorber; a plasticizer, a colorant, a mildew-preventing agent, a foam breaker, a dispersing agent and a discoloration-preventing agent.

### [Process for producing rigid foamed synthetic resin]

The present invention provides a process for producing a rigid foamed synthetic resin by reacting the polyol mixture (P) and the polyisocyanate compound (I) in the presence of a catalyst, a blowing agent, a foam stabilizer and a flame retardant.

Specifically, the polyol mixture (P) is preliminarily prepared, and the polyol mixture (P) and part or all of the components other than the polyisocyanate compound (I) are mixed to prepare a polyol system solution. Then, the polyol system solution, the polyisocyanate compound (I) and the remaining components are mixed to prepare a foam stock solution composition, which is subjected to foaming and curing.

The blowing agent may be preliminarily blended in the polyol system solution or it may be blended after the polyol system solution and the polyisocyanate compound (I) are mixed. It is preferably preliminarily blended in the polyol system solution.

The foam stabilizer, the catalyst and the flame retardant may be incorporated in either of the polyol system solution and the solution containing the polyisocyanate compound (I). However, it is preferred to incorporate them in the polyol system solution in order to prevent separation of the foam stabilizer, the catalyst and the flame retardant added, and deactivation, i.e. to attain stable performance.

The process for producing a rigid polyurethane foam of the present invention may be applicable to various forming methods.

The forming methods may, for example, be injection molding, slab stock molding and spraying.

The injection molding is a method of injecting a rigid foam material into a flame such as a mold, followed by foaming.

The slab stock molding is a method of supplying a rigid foam material between two face materials, followed by foaming to produce a laminate comprising a rigid foam sandwiched between the face materials, and is applicable to e.g. production of an insulating material for building use.

The spraying is a method of spraying a rigid foam by a sprayer.

According to the present invention, by using, as the polyol mixture (P), a polyol (A) having a hydroxyl value of from 56 to 250 mgKOH/g obtained by using a bisphenol compound as the initiator and a polyol (B) having a hydroxyl value of from 100 to 800 mgKOH/g obtained by using a Mannich condensation product as the initiator, the resulting polyol system solution has a low viscosity even if a large quantity of water is contained as the blowing agent, as described in the after-mentioned Examples.

It is considered that the polyol (A) having a low hydroxyl value contributes thereto. That is, in the paragraph [0016] of the above Patent Document 2 in which an alkylene oxide adduct of bisphenol A is used, it is disclosed that when an alkylene oxide is added in an amount of higher than 3 mol per 1 mol of bisphenol A as the initiator (if the hydroxyl value is low), the strength of the obtainable rigid foam is insufficient, and the rigid foam may shrink and deform immediately after forming or with time. Whereas, in the present invention, the polyol (B) obtained by using a Mannich condensation product as the initiator contributes to an improvement in the strength of the rigid foam, whereby a rigid foam having favorable strength which will not undergo shrinkage and deformation even when the polyol (A) has a low hydroxyl value, can be obtained. Accordingly, a low viscosity of the polyol system solution can be achieved while suppressing the decrease in the strength of the rigid foam.

Further, according to the present invention, by using, as the polyol mixture (P), the above-mentioned polyol (A) and polyol (B), favorable adhesiveness and flame retardancy can be obtained even without using polyester polyol, and since no polyester polyol is contained, favorable storage stability of the polyol system solution can be obtained, as described in the after-mentioned Examples.

It is considered that the polyol (A) contributes to an improvement in the flame retardancy and the polyol (B) contributes to an improvement in the flame retardancy and the adhesiveness. In the paragraph [0017] of the above Patent Document 2, it is disclosed that if the amount of the alkylene oxide adduct of bisphenol (A) used exceeds 20 mass% of the entire polyol component, the adhesiveness to the face material tends to be poor. Whereas, it is considered that in the present invention, since the polyol (B) obtained by using a Mannich condensation product as the initiator contributes to an improvement in the adhesiveness, favorable adhesiveness can be obtained even though a relatively large amount of the polyol (A) is incorporated, and excellent flame retardancy can be achieved.

As the favorable adhesiveness, a peel strength of at least 0.20 kgf/cm³ at a peeling angle of 45° relative to the face material is preferred.

Further, according to the present invention, the reactivity of the polyol system solution and the polyisocyanate compound (I) is favorable, and as described in the after-mentioned Examples, a rigid foamed synthetic resin having excellent physical properties can be produced by spraying. That is, the present invention is suitable for a process for producing a rigid foamed synthetic resin by spraying.

### EXAMPLES

Now, the present invention will be described in detail with reference to Examples. However, it should be understood that the present invention is by no means restricted to these Examples. The following materials were used.
Flame retardant A: trischloropropyl phosphate (product name: Fyrol PCF, manufactured by Supresta Japan)
. Blowing agent A: water
Foam stabilizer A: silicone-type foam stabilizer (product name: SH-193, manufactured by Dow Corning Toray Co., Ltd.)
Catalyst A: reactive blowing catalyst (a 70 mass% DPG (dipropylene glycol) solution of bis(2-dimethylaminoethyl) ether, product name: TOYOCAT RX-7, manufactured by TOSOH CORPORATION)
Catalyst B: triazine type blowing catalyst (product name: POLYCAT 41, manufactured by Air Products and Chemicals, Inc.)
Catalyst C: a mixture of a quaternary ammonium salt and ethylene glycol (product name: TOYOCAT-TRX, manufactured by TOSOH CORPORATION)
Polyisocyanate A: Polymeric MDI (mixture of MDI and crude MDI), product name: CORONATE 1130, manufactured by NIPPON POLYURETHANE INDUSTRIES, CO., LTD., viscosity at 25°C: 130 mPa·s, isocyanate group content: 31 mass%)

### <Polyol (A)>

### [Polyol A-1]

A polyether polyol having a hydroxyl value of 200 mgKOH/g obtained by subjecting 8 mol of EO to ring-opening addition polymerization to 1 mol of bisphenol A as the initiator. Viscosity at 25°C: 1,800 mPa·s.

### [Polyol A-2]

A polyether polyol having a hydroxyl value of 150 mgKOH/g obtained by subjecting 12 mol of EO to ring-opening addition polymerization to 1 mol of bisphenol A as the initiator. Viscosity at 25°C: 1,200 mPa·s.

### [Polyol A-3]

A polyether polyol having a hydroxyl value of 100 mgKOH/g obtained by subjecting 20 mol of EO to ring-opening addition polymerization to 1 mol of bisphenol A as the initiator. Viscosity at 25°C: 850 mPa·s.

### [Polyol A-4]

A polyether polyol having a hydroxyl value of 270 mgKOH/g obtained by subjecting 4 mol of EO to ring-opening addition polymerization to 1 mol of bisphenol A as the initiator. Viscosity at 25°C: 11,000 mPa·s.

### <Polyol (B)>

### [Polyol B-1]

A polyether polyol having a hydroxyl value of 300 mgKOH/g obtained by subjecting EO, PO and EO in this order to ring-opening addition polymerization to a reaction product obtained by reacting 0.75 mol of formaldehyde and 2.2 mol of diethanolamine with 1 mol of nonylphenol, as the initiator. The amount of addition of the alkylene oxides is 16.7 mol per 1 mol of nonylphenol. The proportion of EO to the total amount of PO and EO added is 75 mass%. Viscosity at 25°C: 470 mPa·s.

### [Polyol B-2]

A polyether polyol having a hydroxyl value of 300 mgKOH/g obtained by subjecting PO and EO in this order to ring-opening addition polymerization to a reaction product obtained by reacting 1.5 mol of formaldehyde and 2.2 mol of diethanolamine with 1 mol of nonylphenol, as the initiator. The amount of addition of the alkylene oxides is 15.4 mol per 1 mol of nonylphenol. The proportion of EO to the total amount of PO and EO added is 58 mass%. Viscosity at 25°C: 1,000 mPa·s.

### [Polyol B-3]

A polyether polyol having a hydroxyl value of 350 mgKOH/g obtained by subjecting PO and EO in this order to ring-opening addition polymerization to a reaction product obtained by reacting 1.5 mol of formaldehyde and 2.2 mol of ethanolamine with 1 mol of nonylphenol, as the initiator. The amount of addition of the alkylene oxides is 11.2 mol per 1 mol of nonylphenol. The proportion of EO to the total amount of PO and EO added is 58 mass%. Viscosity at 25°C: 1,500 mPa·s.

### [Polyol B-4]

A polyether polyol having a hydroxyl value of 430 mgKOH/g obtained by subjecting PO and EO in this order to ring-opening addition polymerization to a reaction product obtained by reacting 2.2 mol of formaldehyde and 2.2 mol of diethanolamine with 1 mol of nonylphenol, as the initiator. The amount of addition of the alkylene oxides is 6.3 mol per 1 mol of nonylphenol. The proportion of EO to the total amount of PO and EO added is 23 mass%. Viscosity at 25°C: 6,000 mPa·s.

### [Polyol B-5]

A polyether polyol having a hydroxyl value of 590 mgKOH/g obtained by subjecting EO alone to ring-opening addition polymerization to a reaction product obtained by reacting 1.5 mol of formaldehyde and 2.2 mol of diethanolamine with 1 mol of nonylphenol, as the initiator. The amount of addition of the alkylene oxide is 2.6 mol per 1 mol of nonylphenol. Viscosity at 25°C: 33,000 mPa·s.

### <Polyol (C)>

### [Polyol C-1]

A polyether polyol having a hydroxyl value of 112 mgKOH/g, obtained by subjecting PO and EO in this order to ring-opening addition polymerization to glycerin as the initiator. The amount of addition of the alkylene oxides is 27.8 mol per 1 mol of glycerin. The proportion of EO to the total amount of PO and EO added is 40 mass%. Viscosity at 25°C: 320 mPa·s.

### [Polyol C-2]

A polyether polyol having a hydroxyl value of 112 mgKOH/g, obtained by subjecting PO and EO in this order to ring-opening addition polymerization to glycerin as the initiator. The amount of addition of the alkylene oxides is 26.7 mol per 1 mol of glycerin. The proportion of EO to the total amount of PO and EO added is 33 mass%. Viscosity at 25°C: 320 mPa·s.

### [Polyol C-3]

A polyether polyol having a hydroxyl value of 112 mgKOH/g, obtained by subjecting a mixture of PO and EO to ring-opening addition polymerization to dipropylene glycol as the initiator. The amount of addition of the alkylene oxides is 18.8 mol per 1 mol of dipropylene glycol. The proportion of EO to the total amount of PO and EO added is 80 mass%. Viscosity at 25°C: 200 mPa·s.

### [Polyol C-4]

A polyether polyol having a hydroxyl value of 56 mgKOH/g, obtained by subjecting a mixture of PO and EO to ring-opening addition polymerization to dipropylene glycol as the initiator. The amount of addition of the alkylene oxides was 40.6 mol per 1 mol of dipropylene glycol. The proportion of EO to the total amount of PO and EO added is 80 mass%. Viscosity at 25°C: 460 mPa·s.

### [Polyol C-5]

A polyether polyol having a hydroxyl value of 350 mgKOH/g, obtained by subjecting EO alone to ring-opening addition polymerization to N-(2-aminoethyl)piperazine as the initiator. The amount of addition of the alkylene oxide is 8.0 mol per 1 mol of N-(2-aminoethyl)piperazine. Viscosity at 25°C: 700 mPa·s.

### [Polyol C-6]

A polyether polyol having a hydroxyl value of 450 mgKOH/g, obtained by subjecting PO and EO in this order to ring-opening addition polymerization to ethylenediamine as the initiator. The amount of addition of the alkylene oxides is 8.7 mol per 1 mol of dipropylene glycol. The proportion of EO to the total amount of PO and EO added is 41 mass%. Viscosity at 25°C: 1,200 mPa·s.

### [Polyol C-7]

A polyether polyol having a hydroxyl value of 350 mgKOH/g, obtained by subjecting EO, PO and EO in this order to ring-opening addition polymerization to tolylenediamine as the initiator. The amount of addition of the alkylene oxides is 9.9 mol per 1 mol of tolylenediamine. The proportion of EO to the total amount of PO and EO added is 33 mass%. Viscosity at 25°C: 7,000 mPa·s.

### <Polyol (D-1)>

A p-phthalic acid based polyester polyol (product name: PL305, manufactured by Hitachi Chemical Company, Ltd., hydroxyl value: 315 mgKOH/g, viscosity: 2,600 mPa·s (25°C)).

### <Polyol (D-2)>

A p-phthalic acid based polyester polyol (product name: PL272, manufactured by Hitachi Chemical Company, Ltd., hydroxyl value: 230 mgKOH/g, viscosity: 2,100 mPa·s (25°C)).

### <Polyol (D-3)>

A p-phthalic acid based polyester polyol (product name: SV165, manufactured by Hitachi Chemical Company, Ltd., hydroxyl value: 200 mgKOH/g, viscosity: 820 mPa·s (25°C)).

The polyols (D-1) to (D-3) are polyester polyols and are different from the polyols (A) to (C) of the present invention.

### <Polymer-dispersed polyol (W)>

As the polymer-dispersed polyol (W), polymer-dispersed polyol W1 to W6 obtained as described below in Preparation Examples by using the formulations shown in Table 1. In Table 1, the ratios are indicated in "parts by mass".

### [Monomers having a polymerizable unsaturated bond]

As the monomer having a polymerizable unsaturated bond to be used for formation of polymer particles, acrylonitrile (AN), vinyl acetate (Vac), methyl methacrylate (MMA) and a polyfluoroalkyl methacrylate (FMA) represented by the formula (1-1) were used.

### [Macromonomers]

As the macromonomer, the following two species were used.

Macromonomer M1: macromonomer having a polymerizable unsaturated group and a hydroxyl value of 40 mgKOH/g obtained by reacting the following polyol E, tolylene diisocyanate (product name: T-80, manufactured by NIPPON POLYURETHANE INDUSTRY CO., LTD.) and 2-hydroxylethyl methacrylate (manufactured by Junsei Chemical Co., Ltd.) in a molar ratio of 1/1/1 at 60°C for 1 hour and then at 80°C for 6 hours.

Macromonomer M2: macromonomer having a polymerizable unsaturated group and a hydroxyl value of 21 mgKOH/g obtained by reacting the following polyol F, tolylene diisocyanate (product name: T-80, manufactured by NIPPON POLYURETHANE INDUSTRY CO., LTD.) and 2-hydroxylethyl methacrylate (manufactured by Junsei Chemical Co., Ltd.) in a molar ratio of 1/1/1 at 60°C for 1 hour and then at 80°C for 6 hours.

Polyol E: polyoxyalkylene polyol having a hydroxyl value of 48 mgKOH/g and an oxyethylene group content of 65 mass% in the polyol D obtained by subjecting EO to ring-opening addition polymerization to glycerin as the initiator and subjecting a mixture of PO and EO [PO/EO = 46.2/53.8 (mass ratio)] to ring-opening polymerization.

Polyol F: polyoxyalkylene polyol having a hydroxyl value of 28 mgKOH/g and an oxyethylene group content of 60 mass% in the polyol obtained by subjecting EO to ring-opening addition polymerization to glycerin as the initiator and subjecting a mixture of PO and EO [PO/EO = 48.0/52.0 (mass ratio)] to ring-opening polymerization.

### [Base polyol (W')]

As the base polyol (W'), the following Polyols X1, Z1 and Z2 were used.

### (Polyol X1)

Polyether polyol having a hydroxyl value of 50 mgKOH/g and an EO group content of 68 mass% obtained by randomly adding EO and PO to glycerin as the initiator in the ratio of EO/PO+EO of 70 mass% by ring-opening addition polymerization.

### (Polyol Z1)

Polyether polyol having a hydroxyl value of 650 mgKOH/g obtained by subjecting PO to ring-opening addition polymerization to glycerin as the initiator.

### (Polyol Z2)

Polyether polyol having a hydroxyl value of 760 mgKOH/g obtained by subjecting PO to ring-opening addition polymerization to ethylenediamine as the initiator. PREPARATION EXAMPLE 1: Production of polymer-dispersed polyol (W1)

Into a 5 L (liter) pressure reactor, the base polyol (W'), monomers and AMBN as the polymerization initiator were loaded in the ratio shown in Table 1, and the temperature was raised with stirring, and the reaction was carried out for 10 hours while the reaction solution was maintained at 80°C. The monomer conversion reached 80% or above. After completion of the reaction, the unreacted monomers were removed by 2 hours of vacuum deaeration with heating at 110°C at 20 Pa to obtain polymer-dispersed polyol W1.

The hydroxyl value and viscosity at 25°C of polymer-dispersed polyol W1 and the content of polymer particles in polymer-dispersed polyol W1 are shown in Table 1 (the same applies hereinafter).

### PREPARATION EXAMPLES 2 and 3: Production of polymer-dispersed polyols (W2) and (W3)

Into a 5 L pressure reactor, 70 mass% of the mixture as the base polyol (W') shown in Table 1 was loaded, and a mixture of the rest of the mixture as the base polyol (W') and monomers and a polymerization initiator (AMBN) was fed over 2 hours with stirring while the temperature was maintained at 120°C. After completion of the feeding of the entire mixture, stirring was continued at the same temperature (120°C) for about 0.5 hour. In Preparation Examples 2 and 3, the monomer conversion reached 80% or above. After completion of the reaction, the unreacted monomers were removed by 2 hours of vacuum deaeration with heating at 120°C at 20 Pa to obtain polymer-dispersed polyols W2 and W3.

### PREPARATION EXAMPLES 4 to 6: Production of polymer-dispersed polyols (W4), (W5) and (W6)

Into a 5 L pressure reactor, Polyol X, Polyol Z1 and macromonomers were loaded in the ratio shown in Table 1, and while the temperature was maintained at 120°C, a mixture of monomers and a polymerization initiator (AMBN) was fed over 2 hours with stirring. After completion of the feeding of the entire mixture, stirring was continued at the same temperature (120°C) for about 0.5 hour. Then, the unreacted monomers were removed at 120°C under reduced pressure over 3 hours to obtain polymer-dispersed polyols W4, W5 and W6.

**TABLE 1**

| Preparation Example | | | 1 | 2 | 3 | 4 | 5 | 6 |
|---|---|---|---|---|---|---|---|---|
| Composition of polymer-dispersed polyol (W) | Base polyol (W') | Polyol X1 | 900 | 1,420 | 900 | 1,575 | 1,350 | 1,350 |
| | | Polyol Z1 | 900 | 830 | 1,125 | 675 | 900 | 900 |
| | | Polyol Z2 | 450 | | 225 | | | |
| | Monomer having polymerizable unsaturated bond | AN | 150 | 400 | 400 | | | 187.5 |
| | | Vac | 600 | | | 450 | 450 | |
| | | MMA | | 350 | 350 | | | |
| | | FMA | | | | 300 | 300 | 187.5 |
| | Polymerization initiator·AMBN | | 30 | 30 | 30 | 14.2 | 14.2 | 14.2 |
| | Macromonomer | Macromonomer M1 | | | | 28.5 | 28.5 | |
| | | Macromonomer M2 | | | | | | 28.5 |
| Content of polymer particles (mass%) | | | 25 | 25 | 25 | 20 | 20 | 10 |
| Hydroxyl value of (W) | | [mgKOH/g] | 330 | 205 | 315 | 192 | 247 | 267 |
| Viscosity of (W) (25°C) | | [mPa·s] | 1,500 | 2,600 | 2,600 | 1,700 | 1,600 | 1,300 |
| Name | | | W1 | W2 | W3 | W4 | W5 | W6 |

### EXAMPLES 1 to 26: Preparation of rigid foam (simple foaming)

Rigid foams were produced from polyol system solutions prepared in accordance with the formulations shown in Tables 2 to 5 and the polyisocyanate compound (I), and evaluated by the following methods. In Tables, the ratios are indicated in "parts by mass" (the same applies hereinafter).

Polyol system solutions were prepared by adding and mixing polyol mixture (P), water as the blowing agent, a catalyst, a foam stabilizer and a flame retardant. Water was used alone as the blowing agent. In Tables, the average hydroxyl values (unit: mgKOH/g) of entire polyol mixtures (X) and the viscosities (unit: mPa·s, represented as "system solution viscosity" in Tables) of polyol system solutions at 25°C are shown.

Polyol system solutions and polyisocyanate compound (I) were used in a volume ratio of 1/1 for production of rigid foams. The amounts of the polyisocyanate compound (I) used are represented by the isocyanate indices in Tables.

### <Simple foaming test>

A polyol system solution and the polyisocyanate compound were maintained at 10°C and quickly put into a 1 L polyethylene cup and agitated at 3,000 rpm for 3 seconds for foaming.

The reactivity of the rigid foam, the density (cup free density) of the obtained rigid foam and the dimensional change (dimensional stability) were evaluated by the following methods. The evaluation results are shown in Tables.

### [Reactivity (cream time and rise time)]

The time between mixing of the polyol system solution and the polyisocyanate compound at 0 second and the onset of a creamy appearance of the foam stock solution composition was defined as cream time (sec), and the time between mixing of the polyol system solution and the polyisocyanate compound at 0 second and the termination of rise of the foam due to expansion of the foam stock solution composition was defined as rise time (sec).

The shorter the cream time and the rise time, the better the reactivity.

### [Density (cup free density)]

The core of the resulting rigid foam was cut into a 70 mm x 70 mm x 70 mm cube, and the density (unit: kg/m³) was calculated from the weight and the volume.

### [Dimensional change (high temperature dimensional stability)]

70 mm x 70 mm x 70 mm cubes were cut out from the rigid foam and maintained at 70°C under a relative humidity of 0% in the case of high temperature condition (high temperature appearance shrinkage) or at 70°C under a relative humidity of 95% in the case of wet heat condition (wet heat appearance shrinkage) for 24 hours, and the increased length (thickness) after 24 hours relative to the length (thickness) before maintenance was represented as the dimensional change (unit: %). That is, under each of the two conditions (high temperature condition and wet heat condition), dimensional changes in three directions (X, Y and Z) were respectively measured. A negative dimensional change means shrinkage, and a high absolute value indicates a significant dimensional change.

From the results of measurement of the dimensional change, the dimensional stability was evaluated based on the following evaluation standards.

### (Evaluation standards)

○ (good): The maximum absolute value among the dimensional changes in the three directions being less than 1%.
× (bad): The maximum absolute value among the dimensional changes in the three directions being at least 1 %.

**TABLE 2**

| | | Ex. 1 | Ex. 2 | Ex. 3 | Ex. 4 | Ex. 5 | Ex. 6 |
|---|---|---|---|---|---|---|---|
| Polyol mixture (P) | Polyol A-1 | 50 | 50 | 50 | 50 | 50 | 50 |
| | Polyol B-1 | 47 | 47 | 47 | 47 | 47 | 47 |
| | Polyol W1 | 3 | | | | | |
| | Polyol W2 | | 3 | | | | |
| | Polyol W3 | | | 3 | | | |
| | Polyol W4 | | | | 3 | | |
| | Polyol W5 | | | | | 3 | |
| | Polyol W6 | | | | | | 3 |
| Average hydroxyl value [mgKOH/g] | | 251 | 251 | 251 | 251 | 251 | 251 |
| Flame retardant A | | 30 | 30 | 30 | 30 | 30 | 30 |
| Blowing agent A | | 5.5 | 5.5 | 5.5 | 5.5 | 5.5 | 5.5 |
| Foam stabilizer A | | 1 | 1 | 1 | 1 | 1 | 1 |
| Catalyst A | | 4 | 4 | 4 | 4 | 4 | 4 |
| Catalyst B | | 4 | 4 | 4 | 4 | 4 | 4 |
| Catalyst C | | 3 | 3 | 3 | 3 | 3 | 3 |
| System solution viscosity [mPa·s] | | 421 | 426 | 426 | 423 | 422 | 420 |
| Polyisocyanate A isocyanate index | | 113 | 113 | 113 | 113 | 113 | 113 |
| Reactivity | Cream time [sec] | 4.5 | 4.5 | 4.6 | 4.5 | 4.5 | 4.6 |
| | Rise time [sec] | 11.4 | 11.6 | 11.5 | 11.5 | 11.6 | 11.7 |
| Cup free density [kg/m³] | | 23.6 | 23.8 | 23.3 | 24.3 | 23.8 | 24.1 |
| High temperature appearance shrinkage | X (70 mm) | -0.12 | -0.21 | -0.32 | 0.27 | 0.11 | -0.05 |
| | Y (70 mm) | -0.36 | -0.23 | -0.44 | -0.33 | -0.21 | -0.22 |
| | Z (70 mm) | -0.12 | -0.09 | -0.16 | 0.07 | -0.12 | -0.07 |
| Wet heat appearance shrinkage | X (70 mm) | -0.42 | -0.65 | -0.32 | -0.49 | -0.66 | -0.33 |
| | Y (70 mm) | -0.53 | -0.45 | -0.21 | -0.33 | -0.11 | -0.54 |
| | Z (70 mm) | -0.62 | -0.32 | -0.11 | -0.66 | -0.35 | -0.12 |
| Dimensional stability | High temperature (70°C) | ○ | ○ | ○ | ○ | ○ | ○ |
| | Wet heat (70°C·95%) | ○ | ○ | ○ | ○ | ○ | ○ |

**TABLE 3**

| | | Ex. 7 | Ex. 8 | Ex. 9 | Ex. 10 | Ex. 11 | Ex. 12 | Ex. 13 | Ex. 14 |
|---|---|---|---|---|---|---|---|---|---|
| Polyol mixture (P) | Polyol A-1 | 50 | 50 | | | | | | |
| | Polyol A-2 | | | 85 | 85 | 85 | 75 | 75 | 75 |
| | Polyol B-1 | | | 12 | | | 22 | | |
| | Polyol B-2 | 47 | | | 12 | | | 22 | |
| | Polyol B-3 | | 47 | | | 12 | | | 22 |
| | Polyol W1 | 3 | 3 | 3 | 3 | 3 | 3 | 3 | 3 |
| Average hydroxyl value [mgKOH/g] | | 251 | 274 | 173 | 173 | 179 | 188 | 188 | 199 |
| Flame retardant A | | 30 | 30 | 30 | 30 | 30 | 30 | 30 | 30 |
| Blowing agent A | | 5.5 | 5.5 | 5.5 | 5.5 | 5.5 | 5.5 | 5.5 | 5.5 |
| Foam stabilizer A | | 1 | 1 | 1 | 1 | 1 | 1 | 1 | 1 |
| Catalyst A | | 4 | 4 | 4 | 4 | 4 | 4 | 4 | 4 |
| Catalyst B | | 4 | 4 | 4 | 4 | 4 | 4 | 4 | 4 |
| Catalyst C | | 3 | 3 | 3 | 3 | 3 | 3 | 3 | 3 |
| System solution viscosity [mPa·s] | | 448 | 453 | | | | 460 | 473 | 565 |
| Polyisocyanate A isocyanate index | | 113 | 109 | 130 | 130 | 129 | 127 | 127 | 124 |
| Reactivity | Cream time [sec] | 4.6 | 4.6 | 4.5 | 4.6 | 4.5 | 4.6 | 4.6 | 4.7 |
| | Rise time [sec] | 12.0 | 12.3 | 12.0 | 12.4 | 12.5 | 11.8 | 12.0 | 12.1 |
| Cup free density [kg/m³] | | 23.8 | 23.3 | 24.3 | 23.8 | 24.1 | 23.9 | 23.5 | 24.2 |
| High temperature appearance shrinkage | X (70 mm) | -0.21 | -0.32 | 0.27 | 0.11 | -0.05 | 0.24 | 0.12 | -0.20 |
| | Y (70 mm) | -0.23 | -0.44 | -0.33 | -0.21 | -0.22 | -0.41 | -0.21 | -0.45 |
| | Z (70 mm) | -0.09 | -0.16 | 0.07 | -0.12 | -0.07 | -0.16 | -0.09 | -0.21 |
| Wet heat appearance shrinkage | X (70 mm) | -0.65 | -0.32 | -0.49 | -0.66 | -0.33 | -0.28 | -0.11 | -0.55 |
| | Y (70 mm) | -0.45 | -0.21 | -0.33 | -0.11 | -0.54 | -0.37 | -0.21 | -0.51 |
| | Z (70 mm) | -0.32 | -0.11 | -0.66 | -0.35 | -0.12 | -0.22 | -0.09 | -0.21 |
| Dimensional stability | High temperature (70°C) | ○ | ○ | ○ | ○ | ○ | ○ | ○ | ○ |
| | Wet heat (70°C·95%) | ○ | ○ | ○ | ○ | ○ | ○ | ○ | ○ |

**TABLE 4**

| | | Ex. 15 | Ex. 16 | Ex. 17 | Ex. 18 | Ex. 19 |
|---|---|---|---|---|---|---|
| Polyol mixture (P) | Polyol A-3 | 65 | 75 | 75 | 75 | 75 |
| | Polyol B-1 | 32 | | | | |
| | Polyol B-2 | | 22 | | | |
| | Polyol B-3 | | | 22 | | |
| | Polyol B-4 | | | | 22 | |
| | Polyol B-5 | | | | | 22 |
| | Polyol W1 | 3 | 3 | 3 | 3 | 3 |
| Average hydroxyl value [mgKOH/g] | | 171 | 151 | 162 | 180 | 215 |
| Flame retardant A | | 30 | 30 | 30 | 30 | 30 |
| Blowing agent A | | 5.5 | 5.5 | 5.5 | 5.5 | 5.5 |
| Foam stabilizer A | | 1 | 1 | 1 | 1 | 1 |
| Catalyst A | | 4 | 4 | 4 | 4 | 4 |
| Catalyst B | | 4 | 4 | 4 | 4 | 4 |
| Catalyst C | | 3 | 3 | 3 | 3 | 3 |
| System solution viscosity [mPa·s] | | | 450 | 455 | 555 | 600 |
| Polyisocyanate A isocyanate index | | 130 | 136 | 133 | 129 | 120 |
| Reactivity | Cream time [sec] | 4.2 | 4.5 | 4.7 | 4.6 | 4.6 |
| | Rise time [sec] | 12.7 | 12.7 | 12.8 | 13.4 | 11.3 |
| Cup free density [kg/m³] | | 24.5 | 23.1 | 23.9 | 24.1 | 23.5 |
| High temperature appearance shrinkage | X (70 mm) | -0.74 | -0.04 | -0.23 | 0.06 | -0.04 |
| | Y (70mm) | 0.10 | -0.17 | -0.21 | -0.26 | -0.54 |
| | Z (70 mm) | -0.22 | -0.08 | -0.09 | -0.14 | -0.28 |
| Wet heat appearance shrinkage | X (70 mm) | -0.89 | -0.20 | -0.34 | -0.06 | -0.23 |
| | Y (70 mm) | -0.83 | -0.98 | -0.36 | -0.29 | -0.73 |
| | Z (70 mm) | -0.76 | -0.88 | -0.89 | -0.32 | -0.20 |
| Dimensional stability | High temperature (70°C) | ○ | ○ | ○ | ○ | ○ |
| | Wet heat (70°C·95%) | ○ | ○ | ○ | ○ | ○ |

**TABLE 5**

| | | Ex. 20 | Ex. 21 | Ex. 22 | Ex. 23 | Ex. 24 | Ex. 25 | Ex. 26 |
|---|---|---|---|---|---|---|---|---|
| Polyol mixture (P) | Polyol A-1 | 50 | 50 | 50 | 50 | 50 | 50 | 50 |
| | Polyol B-1 | 37 | 37 | 37 | 37 | 37 | 37 | 37 |
| | Polyol C-1 | 10 | | | | | | |
| | Polyol C-2 | | 10 | | | | | |
| | Polyol C-3 | | | 10 | | | | |
| | Polyol C-4 | | | | 10 | | | |
| | Polyol C-5 | | | | | 10 | | |
| | Polyol C-6 | | | | | | 10 | |
| | Polyol C-7 | | | | | | | 10 |
| | Polyol W1 | 3 | 3 | 3 | 3 | 3 | 3 | 3 |
| Average hydroxyl value [mgKOH/g] | | 232 | 232 | 232 | 226 | 256 | 266 | 256 |
| Flame retardant A | | 30 | 30 | 30 | 30 | 30 | 30 | 30 |
| Blowing aqent A | | 5.5 | 5.5 | 5.5 | 5.5 | 5.5 | 5.5 | 5₋5 |
| Foam stabilizer A | | 1 | 1 | 1 | 0.5 | 1 | 1 | 1 |
| Catalyst A | | 4 | 4 | 4 | 5 | 4 | 4 | 4 |
| Catalyst B | | 4 | 4 | 4 | 2 | 4 | 4 | 4 |
| Catalyst C | | 3 | 3 | 3 | - | 3 | 3 | 3 |
| System solution viscosity [mPa·s] | | 418 | 418 | 415 | | 421 | 420 | 420 |
| Polyisocyanate A isocyanate index | | 117 | 117 | 117 | 118 | 112 | 110 | 112 |
| Reactivity | Cream time [sec] | 4.5 | 4.6 | 4.6 | 4.7 | 4.7 | 4.5 | 4.6 |
| | Rise time [sec] | 12.7 | 11.3 | 11.2 | 12.8 | 11.6 | 12.1 | 12.5 |
| Cup free density [kg/m³] | | 23.7 | 24.6 | 23.7 | 24.8 | 24.6 | 24.7 | 24.8 |
| High temperature appearance shrinkage | X (70 mm) | 0.14 | 0.18 | 0.10 | 0.00 | -0.14 | -0.12 | -0.21 |
| | Y (70 mm) | -0.48 | -0.31 | -0.57 | -0.23 | -0.10 | -0.14 | -0.24 |
| | Z (70 mm) | 0.03 | 0.12 | -0.13 | -0.21 | 0.01 | 0.04 | 0.07 |
| Wet heat appearance shrinkage | X (70 mm) | -0.41 | -0.87 | -0.98 | -0.35 | -0.44 | -0.32 | -0.42 |
| | Y (70 mm) | -0.89 | -0.98 | -0.87 | -0.82 | -0.16 | -0.23 | -0.34 |
| | Z (70 mm) | -0.20 | -0.65 | -0.89 | -0.09 | -0.35 | -0.42 | -0.21 |
| Dimensional stability | Hiqh temperature (70°C) | ○ | ○ | ○ | ○ | ○ | ○ | ○ |
| | Wet heat (70°C·95%) | ○ | ○ | ○ | ○ | ○ | ○ | ○ |

### EXAMPLES 27 to 34 and COMPARATIVE EXAMPLES 1 to 3: Storage stability test

In Examples 27 to 34 and Comparative Examples 1 to 3, polyol system solutions were prepared in the same manner as in Example 1 in formulations as identified in Tables 6 and 7, and the reactivity (cream time and rise time) when each polyol system solution and the polyisocyanate compound (I) were mixed was examined by means of simple foaming in the same manner as in Example 1 (measurement of cream time and rise time). The storage stability was evaluated based on a change in the reactivity between a case where the polyol system solution immediately after preparation (initial) was used and a case where the polyol system solution after storage was used. The evaluation results are shown in Tables.

The formulations in Examples 28 and 29 are the same as those in Examples 20 and 21, respectively, and the formulations in Examples 31 to 34 are the same as the formulations in Examples 23 to 26, respectively.

That is, the reactivity was measured by using the polyol system solution immediately after preparation (initial).

Further, the polyol system solution was left at rest in an atmosphere of 40°C, and the reactivity was measured one week later and two weeks later. The reactivity change was evaluated based on the following evaluation standards. The smaller the reactivity change, the better the storage stability of the polyol system solution.

### (Evaluation standards)

○ (good): Both the increase in the rise time and the increase in the cream time relative to the initial reactivity being at most +1 second.
× (bad): At least one of the increase in the rise time and the increase in the cream time relative to the initial reactivity being at least +1 second.

**TABLE 6**

| | | Ex. 27 | Ex. 28 | Ex. 29 | Ex. 30 | Ex. 31 | Ex.32 | Ex. 33 | Ex. 34 |
|---|---|---|---|---|---|---|---|---|---|
| Polyol mixture (P) | Polyol A-1 | 50 | The same as in Ex. 20 | The same as in Ex. 21 | 50 | The same as in Ex. 23 | The same as in Ex. 24 | The same as in Ex. 25 | The same as in Ex. 26 |
| | Polyol B-1 | 47 | | | 37 | | | | |
| | Polyol C-3 | | | | 10 | | | | |
| | Polyol W1 | 3 | | | 3 | | | | |
| Average hydroxyl value [mgKOH/g] | | 251 | | | 232 | | | | |
| Flame retardant A | | 30 | | | 30 | | | | |
| Blowing agent A | | 5.5 | | | 5.5 | | | | |
| Foam stabilizer A | | 1 | | | 1 | | | | |
| Catalyst A | | 4 | | | 4 | | | | |
| Catalyst B | | 4 | | | 4 | | | | |
| Catalyst C | | 3 | | | 3 | | | | |
| System solution viscosity [mPa·s] | | | 418 | 418 | 415 | 417 | 421 | 420 | 420 |
| Polyisocyanate A isocyanate index | | 113 | 117 | 117 | 117 | 118 | 112 | 110 | 112 |
| Initial | Cream time [sec] | 4.5 | 4.5 | 4.6 | 4.6 | 4.7 | 4.7 | 4.5 | 4.6 |
| | Rise time [sec] | 11.4 | 12.7 | 11.3 | 11.2 | 12.8 | 11.6 | 12.1 | 12.5 |
| One week later | Cream time [sec] | 4.6 | 4.5 | 4.5 | 4.7 | 4.7 | 4.6 | 4.6 | 4.7 |
| | Rise time [sec] | 11.7 | 12.5 | 11.6 | 11.6 | 12.5 | 11.9 | 12.5 | 12.7 |
| | Reactivity change | ○ | ○ | ○ | ○ | ○ | ○ | ○ | ○ |
| Two weeks later | Cream time [sec] | 4.5 | 4.5 | 4.5 | 4.7 | 4.7 | 4.6 | 4.6 | 4.7 |
| | Rise time [sec] | 11.5 | 12.6 | 11.5 | 11.3 | 12.7 | 11.6 | 11.9 | 12.5 |
| | Reactivity change | ○ | ○ | ○ | ○ | ○ | ○ | ○ | ○ |

**TABLE 7**

| | | Comp. Ex. 1 | Comp. Ex. 2 | Comp. Ex. 3 |
|---|---|---|---|---|
| Polyol mixture (P) | Polyol D-1 | 100 | | |
| | Polyol D-2 | | 100 | |
| | Polyol D-3 | | | 100 |
| Average hydroxyl value [mgKOH/g] | | 315 | 230 | 200 |
| Flame retardant A | | 30 | 30 | 30 |
| Blowing agent A | | 5.5 | 5.5 | 5.5 |
| Foam stabilizer A | | 1 | 1 | 1 |
| Catalyst A | | 4 | 4 | 4 |
| Catalyst B | | 4 | 4 | 4 |
| Catalyst C | | 3 | 3 | 3 |
| Polyisocyanate A isocyanate index | | 102 | 117 | 124 |
| Initial | Cream time [sec] | 5.3 | 4.6 | 4.5 |
| | Rise time [sec] | 12.0 | 11.0 | 13.5 |
| One week later | Cream time [sec] | 6.6 | 5.0 | 5.9 |
| | Rise time [sec] | 12.3 | 11.4 | 14.1 |
| | Reactivity change | × | ○ | × |
| Two weeks later | Cream time [sec] | 6.9 | 5.7 | 6.4 |
| | Rise time [sec] | 13.2 | 12.5 | 14.7 |
| | Reactivity change | × | × | × |

### EXAMPLES 41 to 62 and COMPARATIVE EXAMPLES 4 and 5: Production of rigid foams (spray foaming)

Rigid foams were produced by spraying by using the polyisocyanate compound (I) and the polyol system solutions prepared in the same manner as in Example 1 in the formulations as identified in Tables 8 to 10, and evaluated by the following methods.

### <Spray foaming test>

Rigid polyurethane foams were produced by spraying a polyol system solution and the polyisocyanate compound (I) from a Gusmer spray foaming unit (product name: FF-1600) at a liquid temperature of 40°C and conducting the foaming at a room temperature of 20°C.

Spray was applied onto flexible boards measuring 600 mm long, 600 mm wide and 5mm thick in a total of three layers, by forming a 1 mm primer layer and then two layers each having a thickness of from 25 to 30 mm.

The workability, moldability and miscibility at the time of spraying and the density (core density), compression strength, dimensional stability, thermal conductivity, adhesiveness and flame retardancy of the resulting rigid foams were evaluated as described below. The results of the evaluation are shown in Tables.

### [Density (core density)]

The core densities of the rigid foams were measured in accordance with JIS A 9526.

### [Thermal conductivity]

Thermal conductivity (unit: mW/m·K) was measured at an average temperature of 20°C in accordance with JIS A1412-2 with a thermal conductivity tester (product name: AUTOA HC-074, manufactured by EKO INSTRUMENTS CO., LTD.).

### [Compression strength]

The compression strengths of the rigid foams were measured in accordance with JIS K7220.

In Tables, "//" represents the compression strength when a load was applied in a direction in parallel with the direction of foaming, and "⊥" represents the compression strength when a load was applied in a direction at right angles to the direction of foaming.

### [Dimensional change (high temperature dimensional stability)]

With respect to 150 mm × 100 mm × 50 mm rectangular parallelepipeds cut out from the rigid foam, evaluation was made in the same manner as in the method for evaluating the high temperature dimensional stability in the above hand foaming test.

### [Adhesiveness]

A rigid foam was foamed on an aluminum craft paper cut in a size of 50 mm × 100 mm. The aluminum craft paper having its periphery peeled was pulled by a push pull gauge at a peel angle of 45°, and the peel strength (kgf/cm³) was measured.
○ (good): Peel strength being at least 0.20 kgf/cm³.
× (bad): Peel strength being less than 0.20 kgf/cm³.

### [Miscibility]

The outer appearance of the rigid foam was visually observed immediately after spray foaming and rated for the uniformity of cell size and hue as follows on a three-grade scale.
○ (good): The cell size and the hue were uniform, and there was no mixing defects.
Δ (acceptable): One of non-uniform cell size, non-uniform hue and mixing defects was confirmed.
× (bad): At least two of non-uniform cell size, non-uniform hue and mixing defects were confirmed.

### [Spray workability]

It was visually evaluated how much the spray mist spread as follows on a three-grade scale.
○ (good): The mist spread at a sufficiently wide angle and formed a smooth foam surface.
Δ (acceptable): The spread angle of the mist was slightly insufficient to form a smooth foam surface.
× (bad): The spread angle of the mist was insufficient to form a smooth foam surface.

### [Moldability (foam construction)]

The edges of the resulting rigid foams were cut, the state of the cross sections were confirmed, and the foam specimens were evaluated on the following scale.
○ (good): There were no defects such as scorch marks, cracks and non-uniform cells inside the rigid foam.
× (bad): There were defects such as scorch marks, cracks and/or non-uniform cells inside the rigid foam.

### [Flame retardancy (cone calorie test)]

For a flame retardancy test, the foam samples with the flexible boards obtained in the spray foaming test were cut to a thickness of 20 mm and subjected to heat release measurement (cone calorie test) using a cone calorimeter in accordance with ISO5660.

The results of measurement of the maximum heat release rate are shown in Tables, and the cone calorie test results are shown in Tables with a symbol ○ (good): a maximum heat release rate being at most 200 kW/m² and × (bad) a maximum heat release rate being higher than 200 kW/m².

**TABLE 8**

| | | Ex. 41 | Ex. 42 | Ex. 43 | Ex. 44 | Ex. 45 | Ex. 46 |
|---|---|---|---|---|---|---|---|
| Polyol mixture (P) | | The same as in Ex. 1 | The same as in Ex. 2 | The same as in Ex. 3 | The same as in Ex. 4 | The same as in Ex. 5 | The same as in Ex. 6 |
| Average hydroxyl value [mgKOH/g] | | | | | | | |
| Flame retardant A | | | | | | | |
| Blowing agent A | | | | | | | |
| Foam stabilizer A | | | | | | | |
| Catalyst A | | | | | | | |
| Catalyst B | | | | | | | |
| Catalyst C | | | | | | | |
| System solution viscosity [mPa·s] | | 421 | 426 | 426 | 423 | 422 | 420 |
| Polyisocyanate A isocyanate index | | 113 | 113 | 113 | 113 | 113 | 113 |
| Core density [kg/m³] | | 30.9 | 30.5 | 30.4 | 30.7 | 29.9 | 30.1 |
| Thermal conductivity [mW/m·K] | | 29.6 | 29.5 | 28.8 | 29.1 | 29.8 | 28.3 |
| Compression strength [MPa] | // | 0.12 | 0.13 | 0.12 | 0.11 | 0.12 | 0.12 |
| | ⊥ | 0.07 | 0.07 | 0.08 | 0.06 | 0.06 | 0.06 |
| High temperature appearance shrinkage | X (150 mm) | -0.16 | -0.18 | -0.21 | -0.21 | -0.21 | -0.11 |
| | Y (100 mm) | -0.66 | -0.43 | -0.52 | -0.76 | -0.32 | -0.23 |
| | Z (50 mm) | -0.13 | -0.21 | -0.34 | -0.37 | -0.33 | -0.43 |
| Wet heat appearance shrinkage | X (150 mm) | -0.54 | -0.21 | -0.54 | -0.45 | -0.56 | -0.27 |
| | Y (100 mm) | -0.34 | -0.32 | -0.56 | -0.52 | -0.21 | -0.66 |
| | Z (50 mm) | -0.49 | -0.46 | -0.43 | -0.66 | -0.76 | -0.73 |
| Dimensional stability | High temperature (70°C) | ○ | ○ | ○ | ○ | ○ | ○ |
| | Wet heat (70°C·95%) | ○ | ○ | ○ | ○ | ○ | ○ |
| Adhesiveness | | ○ | ○ | ○ | ○ | ○ | ○ |
| Miscibility | | ○ | ○ | ○ | ○ | ○ | ○ |
| Spray workability | | ○ | ○ | ○ | ○ | ○ | ○ |
| Moldability (foam construction) | | ○ | ○ | ○ | ○ | ○ | ○ |
| Flame retardancy | Cone calorie test results | ○ | ○ | ○ | ○ | ○ | ○ |
| | Maximum heat release rate [kW/m²] | 167.5 | 165.2 | 168.2 | 163.9 | 169.2 | 170.8 |

**TABLE 9**

| | | Ex. 47 | Ex. 48 | Ex. 49 | Ex. 50 | Ex. 51 | Ex. 52 | Ex. 53 | Ex. 54 | Ex. 55 |
|---|---|---|---|---|---|---|---|---|---|---|
| Polyol mixture (P) | | The same as in Ex. 7 | The same as in Ex. 8 | The same as in Ex. 12 | The same as in Ex. 13 | The same as in Ex. 14 | The same as in Ex. 16 | The same as in Ex. 17 | The same as in Ex. 18 | The same as in Ex. 19 |
| Average hydroxyl value [mgKOH/g] | | | | | | | | | | |
| Flame retardant A | | | | | | | | | | |
| Blowing agent A | | | | | | | | | | |
| Foam stabilizer A | | | | | | | | | | |
| Catalyst A | | | | | | | | | | |
| Catalyst B | | | | | | | | | | |
| Catalyst C | | | | | | | | | | |
| System solution viscosity [mPa·s] | | 448 | 453 | 460 | 473 | 565 | 450 | 455 | 555 | 600 |
| Polyisocyanate A isocyanate index | | 113 | 109 | 127 | 127 | 124 | 136 | 133 | 129 | 120 |
| Core density [kg/m³] | | 30.5 | 30.4 | 30.7 | 29.9 | 30.1 | 30.9 | 31.5 | 30.9 | 29.7 |
| Thermal conductivity [mW/m·K] | | 29.5 | 28.8 | 29.1 | 29.8 | 28.3 | 29.1 | 29.1 | 29.4 | 29.8 |
| Compression strength [MPa] | // | 0.13 | 0.12 | 0.11 | 0.12 | 0.12 | 0.11 | 0.11 | 0.12 | 0.12 |
| | ⊥ | 0.07 | 0.08 | 0.06 | 0.06 | 0.06 | 0.06 | 0.07 | 0.07 | 0.07 |
| High temperature appearance shrinkage | X (150 mm) | -0.18 | -0.21 | -0.21 | -0.21 | -0.11 | -0.54 | -0.45 | -0.65 | -0.32 |
| | Y (100 mm) | -0.43 | -0.52 | -0.76 | -0.32 | -0.23 | -0.21 | -0.67 | -0.49 | -0.54 |
| | Z (50 mm) | -0.21 | -0.34 | -0.37 | -0.33 | -0.43 | -0.72 | -0.12 | -0.87 | -0.21 |
| Wet heat appearance shrinkage | X (150 mm) | -0.21 | -0.54 | -0.45 | -0.56 | -0.27 | -0.34 | -0.67 | -0.76 | -0.87 |
| | Y (100 mm) | -0.32 | -0.56 | -0.52 | -0.21 | -0.66 | -0.54 | -0.21 | -0.32 | -0.21 |
| | Z (50 mm) | -0.46 | -0.43 | -0.66 | -0.76 | -0.73 | -0.21 | -0.32 | -0.54 | -0.54 |
| Dimensional stability | High temperature (70°C) | ○ | ○ | ○ | ○ | ○ | ○ | ○ | ○ | ○ |
| | Wet heat (70°C·95%) | ○ | ○ | ○ | ○ | ○ | ○ | ○ | ○ | ○ |
| | Adhesiveness | ○ | ○ | ○ | ○ | ○ | ○ | ○ | ○ | ○ |
| Miscibility | | ○ | ○ | ○ | ○ | Δ | ○ | ○ | Δ | Δ |
| Spray workability | | ○ | ○ | ○ | ○ | ○ | ○ | ○ | ○ | ○ |
| Moldability (foam construction) | | ○ | ○ | ○ | ○ | ○ | ○ | ○ | ○ | ○ |
| Flame retardancy | Cone calorie test results | ○ | ○ | ○ | ○ | ○ | ○ | ○ | ○ | ○ |
| | Maximum heat release rate [kW/m²] | 165.2 | 168.2 | 163.9 | 169.2 | 170.8 | 182.1 | 185.9 | 178.5 | 173.9 |

**TABLE 10**

| | | Ex. 56 | Ex. 57 | Ex. 58 | Ex. 59 | Ex. 60 | Ex. 61 | Ex. 62 | Comp. Ex. 4 | Comp. Ex. 5 |
|---|---|---|---|---|---|---|---|---|---|---|
| Polyol mixture (P) | Polyol A-4 | The same as in Ex. 20 | The same as in Ex. 21 | The same as in Ex. 22 | The same as in Ex. 31 | The same as in Ex. 24 | The same as in Ex. 25 | The same as in Ex. 26 | 60 | 30 |
| | Polyol B-1 | | | | | | | | 37 | 67 |
| | Polyol W1 | | | | | | | | 3 | 3 |
| Average hydroxyl value [mgKOH/g] | | | | | | | | | 256 | 256 |
| Flame retardant A | | | | | | | | | 30 | 30 |
| Blowing agent A | | | | | | | | | 5.5 | 5.5 |
| Foam stabilizer A | | | | | | | | | 1 | 1 |
| Catalyst A | | | | | | | | | 4 | 4 |
| Catalyst B | | | | | | | | | 4 | 4 |
| Catalyst C | | | | | | | | | 3 | 3 |
| System solution viscosity [mPa·s] | | 418 | 418 | 415 | 417 | 421 | 420 | 420 | 782 | 503 |
| Polyisocyanate A isocyanate index | | 117 | 117 | 117 | 118 | 112 | 110 | 112 | 108 | 106 |
| Core density [kg/m³] | | 28.6 | 28.3 | 28.6 | 28.6 | 28.6 | 28.6 | 28.6 | 33.9 | 33.4 |
| Thermal conductivity [mW/m·K] | | 29.8 | 29.5 | 29.8 | 29.8 | 29.8 | 29.8 | 29.8 | 31.5 | 31.7 |
| Compression strength [MPa] | // | 0.11 | 0.11 | 0.11 | 0.11 | 0.11 | 0.13 | 0.13 | 0.13 | 0.13 |
| | ⊥ | 0.06 | 0.06 | 0.06 | 0.06 | 0.06 | 0.10 | 0.10 | 0.09 | 0.09 |
| High temperature appearance shrinkage | X (150 mm) | -0.02 | -0.11 | -0.08 | -0.12 | -0.18 | -0.32 | -0.21 | -0.41 | -0.99 |
| | Y (100 mm) | -0.04 | -0.07 | -0.20 | -0.21 | -0.09 | -0.08 | -0.45 | -0.56 | -1.11 |
| | Z (50 mm) | -0.13 | -0.09 | -0.11 | -0.21 | -0.32 | -0.09 | -0.21 | -0.03 | 0.06 |
| Wet heat appearance shrinkage | X (150 mm) | -0.13 | -0.21 | -0.09 | -0.13 | -0.45 | -0.21 | -0.45 | -1.63 | -2.00 |
| | Y (100 mm) | -0.42 | -0.34 | -0.32 | -0.31 | -0.65 | -0.34 | -0.55 | -1.90 | -2.44 |
| | Z (50 mm) | -0.68 | -0.55 | -0.91 | -0.43 | -0.71 | -0.44 | -0.89 | 1.26 | 0.80 |
| Dimensional stability | High temperature (70°C) | ○ | ○ | ○ | ○ | ○ | ○ | ○ | ○ | ○ |
| | Wet heat (70°C·95%) | ○ | ○ | ○ | ○ | ○ | ○ | ○ | × | × |
| Adhesiveness | | ○ | ○ | ○ | ○ | ○ | ○ | ○ | × | × |
| Miscibility | | ○ | ○ | ○ | ○ | ○ | ○ | ○ | × | Δ |
| Spray workability | | ○ | ○ | ○ | ○ | ○ | ○ | ○ | × | Δ |
| Moldability (foam construction) | | ○ | ○ | ○ | ○ | ○ | ○ | ○ | × | × |
| Flame retardancy | Cone calorie test results | ○ | ○ | ○ | ○ | ○ | ○ | ○ | ○ | ○ |
| | Maximum heat release rate [kW/m²] | 163.4 | 164.6 | 167.8 | 167.1 | 186.5 | 189.6 | 190.6 | 170.0 | 191.0 |

As evident from the results in Tables 2 to 5, in Examples 1 to 26, the polyol system solution had a low viscosity, and a rigid foam having a low density and favorable dimensional stability was obtained by simple foaming. Further, in the storage stability test in Examples 27 to 34 shown in Table 6, a decrease in the reactivity of the polyol system solution was not observed at all.

Whereas, in Comparative Examples 1 to 3 (Table 7) in which no polyol (A) was used and the polyol (D) which is a polyester polyol was used instead, in the storage stability test, the reactivity of the polyol system solution one week or two weeks later was remarkably deteriorated relative to the reactivity of the initial polyol system solution. That is, the storage stability of the polyol system solution was insufficient.

From the results shown in Tables 8 to 10, in Examples 41 to 62, the viscosity of the polyol system solution was low, and the miscibility, the workability and the moldability by spraying were good. The obtained rigid foam had favorable dimensional stability even though it had a low density, and was excellent also in the adhesiveness and the flame retardancy.

Whereas, in Comparative Examples 4 and 5 (Table 10) in which polyol (A-4) having a hydroxyl value of 270 mgKOH/g obtained by subjecting an alkylene oxide to ring-opening addition polymerization to a bisphenol compound as the initiator was used, the viscosity of the polyol system solution was relatively high, the miscibility and the spray workability were poor, and the moldability was insufficient. The obtained rigid foam had insufficient adhesiveness to a substrate, and shrinkage of the rigid foam was confirmed.

Further, in Examples 9 to 11, 12 to 14 and 16 to 19, the rise time is shorter when the proportion of EO to the total amount of PO and EO added is higher. This result indicates that the higher the proportion of EO to all the alkylene oxides in the polyol (B), the higher the reactivity.

Further, Examples 56 to 59 are Examples in which aliphatic polyols C-1, C-2, C-3 and C-4 were used, respectively, and in these Examples, more excellent adhesiveness was obtained, due to improvement in the wettability to the substrate. In Example 60 which is an Example in which polyol C-5 having a high amine content was used, due to improvement in the reactivity, the degree of spread of the spray mist was further improved, and favorable workability was obtained. In Examples 61 and 62 which are Examples in which polyol C-6 which is an aliphatic amine polyol and polyol C-7 which is an aromatic amine polyol were used, respectively, an improvement in the strength of the rigid foam was confirmed due to an improvement in the crosslink density. Further, no deterioration of the flame retardancy was observed with any combination of the polyols.

### INDUSTRIAL APPLICABILITY

The process for producing a rigid foamed synthetic resin of the present invention provides a rigid foam having favorable adhesiveness and flame retardancy, which can be applied by spraying, and the obtained rigid foam is excellent in dimensional stability and further heat resistance, and is useful as e.g. a heat insulating material for building application.

The entire disclosure of Japanese Patent Application No. 2010-103788 filed on April 28, 2010 including specification, claims and summary is incorporated herein by reference in its entirety.

## Claims

1. A process for producing a rigid foamed synthetic resin, which comprises a step of reacting a polyol mixture (P) and a polyisocyanate compound (I) in the presence of a blowing agent, a catalyst, a foam stabilizer and a flame retardant to produce a rigid foamed synthetic resin, wherein
the blowing agent contains water, the polyol mixture (P) contains the following polyol (A) and polyol (B), and the mass ratio (A)/(B) of the polyol (A) to the polyol (B) is from 10/90 to 90/10:
polyol (A): a polyether polyol having a hydroxyl value of from 56 to 250 mgKOH/g, obtainable by subjecting an alkylene oxide to ring-opening addition polymerization to a bisphenol compound as an initiator; and
polyol (B): a polyether polyol having a hydroxyl value of from 100 to 800 mgKOH/g, obtainable by subjecting an alkylene oxide to ring-opening addition polymerization to a Mannich condensation product obtainable by reacting a phenol component, an aldehyde component and an alkanolamine component, as an initiator.

2. The process for producing a rigid foamed synthetic resin according to Claim 1, wherein the alkylene oxide for the polyol (A) contains ethylene oxide.

3. The process for producing a rigid foamed synthetic resin according to Claim 2, wherein the proportion of ethylene oxide is higher than 50 mass% and at most 100 mass% per 100 mass% of all the alkylene oxides for the polyol (A).

4. The process for producing a rigid foamed synthetic resin according to any one of Claims 1 to 3, wherein the alkylene oxide for the polyol (B) contains ethylene oxide.

5. The process for producing a rigid foamed synthetic resin according to Claim 4, wherein the proportion of ethylene oxide is from 10 to 100 mass% per 100 mass% of all the alkylene oxides for the polyol (B).

6. The process for producing a rigid foamed synthetic resin according to any one of Claims 1 to 5, wherein the bisphenol compound for the polyol (A) is at least one member selected from the group consisting of bisphenol A, bisphenol F, bisphenol S, 4,4'-dihydroxybiphenyl and 2,2'-bis(4-hydroxyphenyl)hexafluoropropane.

7. The process for producing a rigid foamed synthetic resin according to any one of Claims 1 to 6, wherein in the polyol (B), the proportion of the aldehyde component is at least 0.3 mol and at most 3.0 mol per 1 mol of the phenol component, and the proportion of the alkanolamine component is at least 0.7 mol and at most 12.0 mol per 1 mol of the aldehyde component.

8. The process for producing a rigid foamed synthetic resin according to any one of Claims 1 to 7, wherein water alone is used as the blowing agent.

9. The process for producing a rigid foamed synthetic resin according to Claim 8, wherein the amount of water used is from 0.5 to 10 parts by mass per 100 parts by mass of the polyol mixture (P).

10. The process for producing a rigid foamed synthetic resin according to any one Claims 1 to 9, wherein the rigid foamed synthetic resin is produced by spraying.
